(19) Europäisches Patentamt European Patent Office Office européen des brevets

(11) **EP 3 742 199 A1**

(12) **EUROPEAN PATENT APPLICATION**
published in accordance with Art. 153(4) EPC

(43) Date of publication:
**25.11.2020 Bulletin 2020/48**

(51) Int Cl.:
***G01S 17/00*** (2020.01)

(21) Application number: **18899543.5**

(86) International application number:
**PCT/CN2018/081367**

(22) Date of filing: **30.03.2018**

(87) International publication number:
**WO 2019/136854 (18.07.2019 Gazette 2019/29)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.01.2018 CN 201810036235**
**17.01.2018 CN 201810045754**
**17.01.2018 CN 201810045703**

(71) Applicant: **Hesai Photonics Technology Co., Ltd**
**Shanghai 201821 (CN)**

(72) Inventors:
• **WANG, Rui**
 **Shanghai 201821 (CN)**
• **LI, Na**
 **Shanghai 201821 (CN)**
• **LU, Yancong**
 **Shanghai 201821 (CN)**
• **XIANG, Shaoqing**
 **Shanghai 201821 (CN)**
• **LI, Yifan**
 **Shanghai 201821 (CN)**

(74) Representative: **Appelt, Christian W.**
**Boehmert & Boehmert**
**Anwaltspartnerschaft mbB**
**Pettenkoferstrasse 22**
**80336 München (DE)**

(54) **LASER RADAR AND OPERATION METHOD THEREFOR**

(57) The present disclosure discloses a lidar and a working method thereof. A beam splitting apparatus splits a first laser beam into multiple second laser beams so that the multiple second laser beams are obtained through one laser emitter. In this way, the quantity of laser emitters is greatly reduced, thereby reducing costs and installation difficulty of the lidar. The lidar has a relatively high angle of view and angular resolution, and is cost-effective.

FIG. 3

## Description

This application claims priority to Chinese Patent Application No. 201810036235.4, filed on January 15, 2018 and entitled "LIDAR AND WORKING METHOD THEREOF", Chinese Patent Application No. 201810045754.7, filed on January 17, 2018 and entitled "LIDAR AND WORKING METHOD THEREOF", and Chinese Patent Application No. 201810045703.4, filed on January 17, 2018 and entitled "LIDAR AND WORKING METHOD THEREOF", which are filed with the Chinese Patent Office and incorporated herein by reference in its entirety.

## BACKGROUND

### Technical Field

The present disclosure relates to the field of photoelectric detection, in particular, to a lidar and a working method thereof.

### Related Art

Lidar is a commonly used range finding sensor characterized by a long detection distance, a high resolution, and less vulnerability to ambient interference, and is widely applicable to fields such as smart robots, unmanned aerial vehicles, and unmanned driving. Working principles of a lidar are similar to those of a microwave radar, in which a distance is evaluated by using a time consumed during a round trip of a light wave between a radar and a target.

Lidars, when first developed, were single-line lidars having only one laser emitter and one detector, and have a limited target scanning range, and easily lose track of the detected target. To compensate for the disadvantages of single-line lidars, multi-line lidars have gradually become a focus of research and commercial application. A multi-line lidar uses multiple laser emitters and corresponding detectors arranged in a vertical direction, thus increasing the detection range in the vertical direction.

However, conventional multi-line radars have the disadvantages of high costs and high installation difficulty.

## SUMMARY

To resolve the problems in the conventional technologies, the present disclosure discloses a lidar and a working method thereof to reduce costs of a lidar apparatus and simplify installation.

The present disclosure discloses a lidar, including: an emitting apparatus, configured to generate a first laser beam; a beam splitting apparatus, configured to split the first laser beam into multiple second laser beams propagated in different directions, where at least a part of the second laser beams is reflected by an object-to-be-detected to form echo beams; and a receiving apparatus, configured to receive the echo beams.

Optionally, the beam splitting apparatus has an optical axis, and a plane perpendicular to the optical axis is a target plane. The beam splitting apparatus is further configured to sparsely and densely distribute spots formed by the multiple second laser beams in the target plane.

Optionally, in the target plane, a distribution density of the spots formed by the second laser beams gradually decreases along a direction away from the optical axis.

Optionally, the beam splitting apparatus has an adjustment axis parallel to the optical axis; and the beam splitting apparatus is configured to rotate around the adjustment axis to change propagation directions of the multiple second laser beams.

Optionally, the beam splitting apparatus is a grating or a fiber beam splitter.

Optionally, the beam splitting apparatus is a Dammann grating.

Optionally, the beam splitting apparatus is a one-dimensional grating, and the beam splitting apparatus has a first grating period along a first direction. The first grating period is d, a wavelength of the first laser beam is $\lambda$, the beam splitting apparatus is an m×1 beam-splitting grating, and m is the quantity of beams into which a laser beam along the first direction is split. An angle at which the beam splitting apparatus rotates around the adjustment axis is less than

$$\arccos\left(\frac{d\sin\frac{\alpha}{m}}{\lambda}\right),$$ where $\alpha$ is a preset angle of view.

Optionally, the first grating period of the beam splitting apparatus is in a range of 47 $\mu$m to 57 $\mu$m; and the wavelength of the first laser beam is in a range of 895 nm to 915 nm.

Optionally, the beam splitting apparatus is a two-dimensional grating, the beam splitting apparatus has a first grating period along a first direction and a second grating period along a second direction, and the first direction is perpendicular to the second direction. The first grating period is $d_1$, the second grating period is $d_2$, the wavelength of the first laser beam is $\lambda$, the beam splitting apparatus is an $m \times n$ beam-splitting grating, m is the quantity of second laser beams formed along the first direction, and n is the quantity of second laser beams formed along the second direction. An angle at which the beam splitting apparatus rotates around the adjustment axis is in a range of

$$0.9\arctan\left(\frac{\arcsin\left(\dfrac{\lambda}{d_1}\right)}{m\times\arcsin\left[\dfrac{\lambda}{d_2}\right]}\right) \text{ to } 1.1\arctan\left(\frac{\arcsin\left(\dfrac{\lambda}{d_1}\right)}{m\times\arcsin\left[\dfrac{\lambda}{d_2}\right]}\right).$$

Optionally, the first grating period of the beam splitting apparatus is in a range of 47 $\mu$m to 57 $\mu$m; the wavelength of the first laser beam is in a range of 895 nm to 915 nm; and the second grating period is in a range of 47 $\mu$m to 57 $\mu$m.

Optionally, the emitting apparatus has a scanning rotation axis that intersects with a propagation direction of the first laser beam, and the emitting apparatus is configured to rotate around the scanning rotation axis. An angle between an optical axis of the beam splitting apparatus and the scanning rotation axis is greater than 0° and less than or equal to 90°.

Optionally, the beam splitting apparatus has at least one beam splitting direction perpendicular to the optical axis, and a plane on which the beam splitting direction and the optical axis are located is a beam splitting plane. Projections of the multiple second laser beams on at least one beam splitting plane are staggered from each other. An angle between the beam splitting direction and the scanning rotation axis is greater than or equal to 0° and less than 90°.

Optionally, the beam splitting apparatus is a grating, and the beam splitting apparatus has a first grating period along a first direction. The beam splitting direction is the first direction.

Optionally, the lidar further includes: a galvanometer, where the galvanometer includes a first reflection surface, and the first reflection surface is configured to reflect the second laser beams; and the galvanometer has a vibrating rotation axis, the galvanometer is configured to rotate around the vibrating rotation axis, and an angle between the vibrating rotation axis and a normal line of the first reflection surface is greater than zero.

Optionally, the beam splitting apparatus is a one-dimensional grating, and the multiple second laser beams are located in the same plane. A plane, on which the multiple second laser beams projected onto the first reflection surface are located, is a propagation plane, an intersection line exists between the first reflection surface and the propagation plane, and an angle between the vibrating rotation axis and the intersection line is greater than 0°.

Optionally, the emitting apparatus has a scanning rotation axis that intersects with a propagation direction of the first laser beam, and the emitting apparatus is configured to rotate around the scanning rotation axis. An angle between the vibrating rotation axis and the scanning rotation axis is greater than 0°.

Optionally, the lidar further includes: a collimation lens, configured to collimate the multiple second laser beams so that propagation directions of the multiple second laser beams are parallel; and a focusing lens, configured to converge the collimated second laser beams to the first reflection surface of the galvanometer.

Optionally, the lidar further includes: a transflective mirror, configured to allow at least a part of the second laser beams to be transmitted and incident on the first reflection surface of the galvanometer; and the transflective mirror includes a second reflection surface, configured to reflect the echo beams, which are reflected by the galvanometer, into the receiving apparatus.

Optionally, the lidar further includes: a receiving convergence lens, configured to converge the echo beams, which are emitted from the transflective mirror, into the receiving apparatus, where a distance between the receiving apparatus and a focal point of the receiving convergence lens is less than a half of a focal depth of the receiving convergence lens.

Optionally, the emitting apparatus is configured to simultaneously generate multiple first laser beams propagated in different directions.

Optionally, the emitting apparatus includes multiple laser emitters, and emitting directions of the multiple laser emitters intersect at least pairwise.

Optionally, the emitting apparatus includes: multiple laser emitters, where emitting directions of the multiple laser emitters are parallel to each other; and a convergence lens, configured to converge first laser beams, which are generated by the multiple laser emitters, to the beam splitting apparatus. A distance from the beam splitting apparatus to a focal plane of the convergence lens is less than a half of a focal depth of the convergence lens.

Correspondingly, the present disclosure also discloses a lidar working method, including: providing a lidar, where the lidar includes: an emitting apparatus, configured to generate a first laser beam; a beam splitting apparatus, configured to split the first laser beam into multiple second laser beams propagated in different directions, where the second laser beams are reflected by an object-to-be-detected to form echo beams; and a receiving apparatus, configured to receive the echo beams; causing the emitting apparatus to generate a first laser beam, where the first laser beam passes through and is split by the beam splitting apparatus into multiple second laser beams propagated in different directions, where at least a part of the second laser beams arrives at and is reflected by the object-to-be-detected to form echo beams; and receiving the echo beams through the receiving apparatus.

Optionally, the beam splitting apparatus has an adjustment axis parallel to an optical axis; and the beam splitting apparatus is configured to rotate around the adjustment axis. After the emitting apparatus is caused to generate the first laser beam, where the first laser beam is split by the beam splitting apparatus into the multiple second laser beams, the beam splitting apparatus is rotated according to a preset resolution.

Optionally, the beam splitting apparatus is a one-dimensional grating, and the beam splitting apparatus has a first grating period along a first direction. The first grating period is d, a wavelength of the first laser beam is $\lambda$, the beam splitting apparatus is an m×1 beam-splitting grating, and m is the quantity of beams into which a laser beam along the first direction is split. In a process of rotating the beam splitting apparatus around the adjustment axis, an angle at which the beam splitting apparatus rotates is less than $\arccos\left(\dfrac{d\sin\dfrac{\alpha}{m}}{\lambda}\right)$, where $\alpha$ is a preset angle of view.

Optionally, the beam splitting apparatus is a two-dimensional grating, the beam splitting apparatus has a first grating period along a first direction and a second grating period along a second direction, and the first direction is perpendicular to the second direction. The first grating period is $d_1$, the second grating period is $d_2$, the wavelength of the first laser beam is $\lambda$, the beam splitting apparatus is an m×n beam-splitting grating, m is the quantity of second laser beams formed along the first direction, and n is the quantity of second laser beams formed along the second direction. In a process of rotating the beam splitting apparatus around the adjustment axis, a range of an angle at which the beam splitting apparatus rotates is: $0.9\arctan\left(\dfrac{\arcsin\left(\dfrac{\lambda}{d_1}\right)}{m\times\arcsin\left[\dfrac{\lambda}{d_2}\right]}\right)$ to $1.1\arctan\left(\dfrac{\arcsin\left(\dfrac{\lambda}{d_1}\right)}{m\times\arcsin\left[\dfrac{\lambda}{d_2}\right]}\right)$.

Optionally, the lidar further includes: a galvanometer, where the galvanometer includes a first reflection surface, and the first reflection surface is configured to reflect the second laser beams. The galvanometer has a vibrating rotation axis, the galvanometer is configured to rotate around the vibrating rotation axis, and an angle between the vibrating rotation axis and a normal line of the first reflection surface is greater than zero. After the emitting apparatus is caused to generate the first laser beam, where the first laser beam is split by the beam splitting apparatus into the multiple second laser beams, the galvanometer is rotated to change propagation directions of the second laser beams reflected from the galvanometer.

Optionally, the beam splitting apparatus is a grating, the beam splitting apparatus has a first grating period along a first direction, a minimum angle between the second laser beams along the first direction that are reflected by the galvanometer is $\theta_1$, and a scanning rotation axis is perpendicular to the first direction. In a process of rotating the galvanometer, a rotation angle of the galvanometer is caused to be greater than or equal to $\theta_1/2$.

Optionally, the emitting apparatus is configured to simultaneously generate multiple first laser beams propagated in different directions. The emitting apparatus includes multiple laser emitters. The step of causing the emitting apparatus to generate the first laser beam includes: turning on, according to a preset resolution, at least one laser emitter to generate at least one first laser beam.

Optionally, the receiving apparatus includes multiple detectors, and each detector is configured to receive an echo beam formed by the object-to-be-detected by reflecting a corresponding second laser beam. A process of receiving the echo beams through the receiving apparatus includes: simultaneously receiving, by the multiple detectors, the echo beams; or, sequentially receiving, by the multiple detectors, corresponding echo beams.

Optionally, the beam splitting apparatus is a Dammann grating.

Compared with the conventional technologies, the technical solutions of the present disclosure have the following advantages:

The lidar disclosed in the technical solutions of the present disclosure includes a beam splitting apparatus. The beam splitting apparatus can split the first laser beam into multiple second laser beams propagated in different directions. The second laser beams propagated in different directions can detect targets-to-be-detected in different directions, thereby increasing an angle of view and an angular resolution of the lidar. The beam splitting apparatus splits the first laser beam into multiple second laser beams so that the multiple second laser beams are obtained through one laser emitter. In this way, the quantity of laser emitters is greatly reduced, thereby reducing costs and installation difficulty of the lidar. The lidar has a relatively high angle of view and angular resolution, and is cost-effective.

In an optional solution of the present disclosure, the beam splitting apparatus is further configured to sparsely and densely distribute the multiple second laser beams in a plane perpendicular to the optical axis. Therefore, without increasing the quantity of the second laser beams, the angular resolution in a part of the plane perpendicular to the optical axis can be effectively increased. This helps increase a utilization rate of the multiple second laser beams and achieve a balance between a high resolution and cost-effectiveness.

In an optional solution of the present disclosure, in the plane perpendicular to the optical axis, the beam splitting apparatus is configured to gradually decrease a distribution density of the multiple second laser beams along a direction away from the optical axis. In a case that the optical axis is parallel to a horizontal plane, the sparse and dense distribution of the multiple second laser beams enables more second laser beams to converge on a horizontal line and approach the ground, achieves a relatively high angular resolution of the lidar in a location of an obstacle during movement of a vehicle, effectively improves accuracy of the lidar in recognizing the obstacle, and helps expand prospects of applying the lidar to vehicles.

In an optional solution of the present disclosure, the beam splitting apparatus has an adjustment axis parallel to the optical axis; and the beam splitting apparatus is configured to rotate around the adjustment axis to change propagation directions of the multiple second laser beams. The rotation of the beam splitting apparatus can change the propagation directions of the multiple second laser beams so as to adjust a vertical angular resolution of the lidar. In addition, the rotation of the beam splitting apparatus can also stagger the second laser beams partially overlapping in a vertical direction, so as to increase the vertical angular resolution. Therefore, the practice of configuring the beam splitting apparatus to be rotatable achieves a balance between a high angular resolution and a large angle of view of the lidar under different environmental requirements, and helps improve precision and accuracy of detection of the lidar.

In an optional solution of the present disclosure, the beam splitting apparatus is a grating or a fiber beam splitter. The practice of configuring the beam splitting apparatus as a grating not only enables the beam splitting apparatus to implement a function of beam splitting to reduce the quantity of laser emitters, but also enables the second laser beams to be distributed non-uniformly in a sparse and dense manner. This achieves a balance between a low cost, a high angular resolution, and a large angle of view, and helps achieve a balance between cost control and performance improvement.

In an optional solution of the present disclosure, the beam splitting apparatus is a Dammann grating. The Dammann grating is a diffractive optical component capable of splitting a single beam into several equal-intensity beams. Therefore, the practice of configuring the beam splitting apparatus to be a Dammann grating effectively improves uniformity of intensity of the multiple second laser beams, and avoids a circumstance in which one of the multiple second laser beams is too weak to be detected by a detector. This effectively ensures detection distances of the multiple second laser beams, ensures that the receiving apparatus successfully detects the echo beams, and helps increase the detection distance of the lidar, achieve a balance between a high vertical angular resolution and a long detection distance, and improve the precision and accuracy of detection performed by the lidar on the object to be detected.

In an optional solution of the present disclosure, the beam splitting apparatus is a one-dimensional grating, and an angle at which the beam splitting apparatus rotates around the adjustment axis is less than $\arccos\left(\dfrac{d\sin\dfrac{\alpha}{m}}{\lambda}\right)$.

With a reasonably set rotation angle of the beam splitting apparatus, the angle of view is larger than a preset angle of view $\alpha$, so that the lidar has a relatively large angle of view while maintaining a relatively high angular resolution.

In an optional solution of the present disclosure, the beam splitting apparatus is a two-dimensional grating, and an angle at which the beam splitting apparatus rotates around the adjustment axis is in a range of $0.9\arctan\left(\dfrac{\arcsin\left(\dfrac{\lambda}{d_1}\right)}{m\times\arcsin\left[\dfrac{\lambda}{d_2}\right]}\right)$ to $1.1\arctan\left(\dfrac{\arcsin\left(\dfrac{\lambda}{d_1}\right)}{m\times\arcsin\left[\dfrac{\lambda}{d_2}\right]}\right)$. With a reasonably set rotation angle of the beam splitting apparatus, not only the angular resolution of the lidar is increased, but also angles between adjacent second laser beams are equal, thereby improving uniformity of distribution of the second laser beams and helping improve performance of the lidar.

In an optional solution of the present disclosure, the emitting apparatus has a scanning rotation axis. The emitting apparatus is configured to rotate around the scanning rotation axis. An angle between an extension direction of the scanning rotation axis and an optical axis direction of the beam splitting apparatus is greater than 0° and less than or equal to 90°. The rotation of the emitting apparatus effectively expands a scanning range of the lidar, and helps improve the detection capability of the lidar and expand the detection range of the lidar.

In an optional solution of the present disclosure, the beam splitting apparatus is a grating. The beam splitting apparatus has at least one beam splitting direction perpendicular to the optical axis. A plane on which the beam splitting direction and the optical axis are located is a beam splitting plane. Projections of the multiple second laser beams on at least one beam splitting plane are staggered from each other. An angle between the beam splitting direction and the scanning rotation axis is greater than or equal to 0° and less than 90°. With the angle between the beam splitting direction and the scanning rotation axis being greater than or equal to 0° and less than 90°, the second laser beams are as staggered as possible along the direction of the scanning rotation axis, thereby improving the angular resolution along the direction of the scanning rotation axis in the case that the quantity of the second laser beams is limited.

In an optional solution of the present disclosure, the lidar further includes a galvanometer configured to rotate around the vibrating rotation axis. The galvanometer has a first reflection surface configured to reflect the second laser beams. The rotation of the galvanometer around the vibrating rotation axis changes the propagation directions of the second laser beams reflected by the first reflection surface, thereby expanding scanning ranges of the second laser beams and increasing the angle of view of the lidar. In addition, as long as the rotation of the galvanometer ensures that a range of a minimum angle between the second laser beams before the rotation is scanned, the obtained angle of view can reach a range of a maximum angle between the second laser beams. Therefore, the combination of the galvanometer and the beam splitting apparatus enables obtaining of a relatively large angle of view by using a relatively small rotation angle of the galvanometer. Therefore, under the same angle-of-view requirements, the rotation angle of the galvanometer is effectively reduced, and the rotation period of the galvanometer is decreased, thereby helping increase a scanning frame frequency of the lidar.

In an optional solution of the present disclosure, the beam splitting apparatus is a two-dimensional grating. The combination of the two-dimensional grating and the galvanometer effectively expands a propagation range of the multiple second laser beams, and helps increase the angular resolution and the angle of view of the lidar in all directions.

In an optional solution of the present disclosure, the lidar further includes a transflective mirror to separate the echo beams from the second laser beams, thereby preventing the second laser beams from interfering with the receiving apparatus, reducing an impact caused by the second laser beams on a detection result, and improving a precision of the lidar. Further, the transflective mirror may be used to implement overlapping of optical paths, thereby shortening optical paths of the lidar, effectively reducing a size of an optical system, and helping reduce the size of the lidar.

In an optional solution of the present disclosure, the emitting apparatus is configured to simultaneously generate first laser beams propagated in different directions. The beam splitting apparatus enables each first laser beam to be split into multiple second laser beams. Therefore, the generated multiple first laser beams propagated in different directions increase the quantity of the second laser beams to be formed. In addition, the propagation direction varies between all the second laser beams generated out of the first laser beams propagated in different directions, thereby further increasing the angular resolution of the lidar.

In an optional solution of the present disclosure, the emitting apparatus includes multiple laser emitters whose emitting directions are parallel to each other, and a convergence lens. The convergence lens is configured to converge the first laser beams, which are generated by the multiple laser emitters, to the beam splitting apparatus. The convergence lens enables the multiple laser emitters with the same emitting direction to generate the first laser beams to be converged to the beam splitting apparatus, thereby not only reducing installation difficulty of the multiple laser emitters, but also generating multiple first laser beams propagated in different directions. This effectively reduces the installation difficulty of the multiple laser emitters, helps reduce installation costs, effectively improves accuracy of optical paths of the first laser beams, and helps improve accuracy and precision of detection of the lidar.

In the lidar working method disclosed in the technical solutions of the present disclosure, the beam splitting apparatus splits the first laser beam into multiple second laser beams so that the multiple second laser beams are obtained through one laser emitter. In this way, the quantity of laser emitters is greatly reduced, thereby reducing costs and installation difficulty of the lidar. The lidar has a relatively high angle of view and angular resolution, and is cost-effective.

In an optional solution of the present disclosure, after the multiple second laser beams are formed, the beam splitting apparatus is rotated according to a preset vertical resolution to change the propagation directions of the multiple second laser beams. By rotating the beam splitting apparatus, the propagation directions of the multiple second laser beams are changed to adjust the vertical angular resolution of the lidar, thereby achieving a balance between the high angular resolution and the large angle of view of the lidar under different environmental requirements, and helping improve the precision and accuracy of detection of the lidar.

In an optional solution of the present disclosure, the emitting apparatus has multiple laser emitters. Therefore, in the step of causing the emitting apparatus to generate the first laser beam, at least one laser emitter may be turned on according to a preset vertical resolution to generate at least one first laser beam. Energy consumption of the lidar is related to the quantity of laser emitters turned on. Therefore, the energy consumption of the lidar is optimized by controlling the quantity of laser emitters turned on, thereby achieving a balance between the angular resolution and energy saving.

## BRIEF DESCRIPTION OF THE DRAWINGS

FIG. 1 is a schematic structural diagram of an emitting apparatus of a multi-line lidar;

FIG. 2 is a three-dimensional schematic structural diagram of a first embodiment of a lidar according to the present disclosure;

FIG. 3 is a schematic diagram of optical paths in an emitting part of the lidar embodiment shown in FIG. 2;

FIG. 4 is a schematic diagram of optical paths in a receiving part of the lidar embodiment shown in FIG. 2;

FIG. 5 is a partial schematic structural diagram of a second embodiment of a lidar according to the present disclosure;

FIG. 6 is a schematic diagram of spots formed on a target plane when an angle between a first direction and a positive direction of y is 0° in the lidar embodiment shown in FIG. 5;

FIG. 7 is a schematic diagram of spots formed on a target plane when an acute angle between a first direction and a y direction is φ in the lidar embodiment shown in FIG. 5;

FIG. 8 is a schematic diagram of spots formed on a target plane in a third embodiment of a lidar according to the present disclosure;

FIG. 9 is a schematic diagram of optical paths in a fourth embodiment of a lidar according to the present disclosure;

FIG. 10 is a schematic diagram of enlarged optical paths of a first laser beam and second laser beams in a region 41 in the lidar embodiment shown in FIG. 9;

FIG. 11 is a schematic diagram of enlarged optical paths of echo beams in the lidar embodiment shown in FIG. 9;

FIG. 12 is a schematic diagram of spots formed by multiple second laser beams on a target plane when a galvanometer is static in the lidar embodiment shown in FIG. 9;

FIG. 13 is a schematic diagram of spots formed by multiple second laser beams on a target plane when a galvanometer 450 rotates by $\theta=dy/41$ radians in the lidar embodiment shown in FIG. 9;

FIG. 14 is a schematic diagram of spots formed by multiple second laser beams on a target plane when a galvanometer 450 rotates by $\theta=-dy/41$ radians in the lidar embodiment shown in FIG. 9;

FIG. 15 is a schematic structural diagram of a fifth embodiment of a lidar according to the present disclosure;

FIG. 16 is a schematic distribution diagram of spots formed on a target plane before and after the beam splitting apparatus in the lidar embodiment shown in FIG. 15 rotates around an adjustment axis; and

FIG. 17 is a schematic structural diagram of a sixth embodiment of a lidar according to the present disclosure.

## DETAILED DESCRIPTION

A lidar apparatus has many problems such as high costs and difficult installation. Reasons for the high costs and difficult installation of the lidar are analyzed below with reference to a type of lidar.
A lidar apparatus mainly includes a laser emitter configured to emit a laser beam and a detector configured to receive a beam reflected by an object to be detected. During operation of the lidar, the laser emitter emits a laser beam to the object to be detected. After being cast onto the object to be detected, the emitted laser is reflected back by the object to be detected, and collected by the detector.

A conventional lidar apparatus includes only one laser emitter and one detector. Therefore, the lidar apparatus can only emit one laser beam at a time, thereby causing a problem of a too low vertical angular resolution of the lidar. To increase the vertical angular resolution of the lidar, a multi-line lidar is provided.

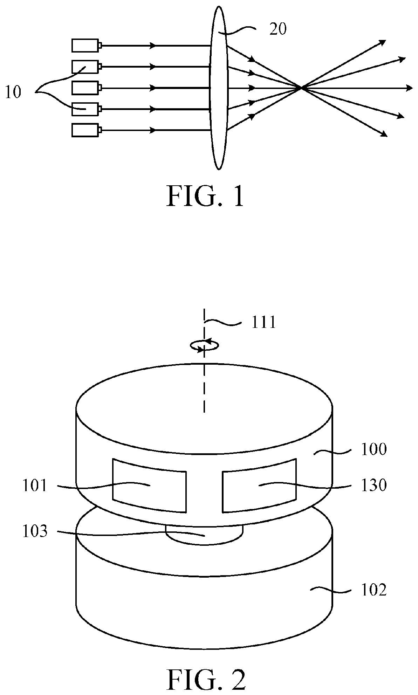

FIG. 1 is a schematic structural diagram of an emitting apparatus of a multi-line lidar.

Referring to FIG. 1, an emitting apparatus of the multi-line lidar includes: multiple laser emitters 10 configured to emit laser beams, and a lens 20 configured to enable the laser beams emitted by the laser emitters 10 at different locations to have different propagation directions. The multiple laser emitters 10 are distributed in a plane (a horizontal plane in FIG. 1) perpendicular to a main optical axis of the lens 20.

Each laser emitter 10 emits a laser beam, and each laser beam transmitted through the lens 20 corresponds to a different laser emitting angle, thereby increasing the resolution of the lidar in a vertical direction. Therefore, the multi-line lidar needs to have one corresponding laser emitter 10 at each emitting angle, resulting in high costs of the lidar. In addition, each laser emitter 10 of the multi-line lidar needs to be placed at a fixed location in a limited space, making installation difficult.

To resolve such technical problems, the present disclosure discloses a lidar and a working method thereof. A beam splitting apparatus splits a first laser beam into multiple second laser beams so that the multiple second laser beams are obtained through one laser emitter. In this way, the quantity of laser emitters is greatly reduced, thereby reducing costs and installation difficulty of the lidar. The lidar has a relatively high angle of view and angular resolution, and is cost-effective.

To make the foregoing objectives, features, and advantages of the present disclosure more apparent and comprehensible, the following describes specific embodiments of the present disclosure in detail below with reference to the accompanying drawings.

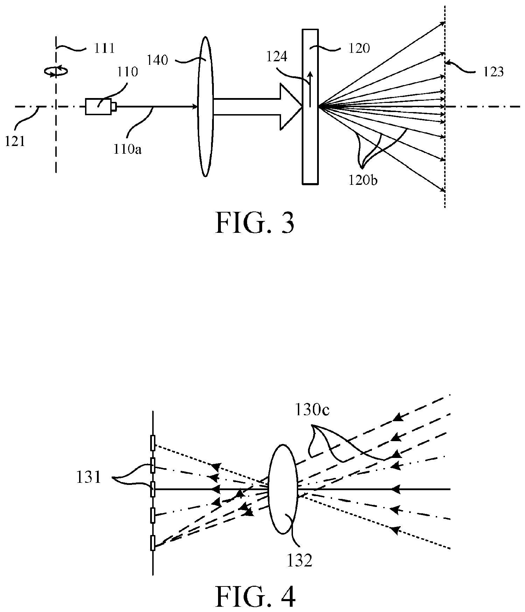

Refer to FIG. 2 to FIG. 4, which are schematic structural diagrams of a first embodiment of a lidar according to the present disclosure, where FIG. 2 is a three-dimensional schematic structural diagram of a lidar embodiment, and FIG. 3 is a schematic diagram of optical paths in an emitting part of the lidar embodiment shown in FIG. 2.

The lidar includes: an emitting apparatus 110 (shown in FIG. 3), where the emitting apparatus 110 is configured to generate a first laser beam 110a; a beam splitting apparatus 120 (shown in FIG. 3), where the beam splitting apparatus 120 is configured to split the first laser beam 110a into multiple second laser beams 120b propagated in different directions, and at least a part of the second laser beams 120b is reflected by an object-to-be-detected to form echo beams; and a receiving apparatus 130, configured to receive the echo beams.

The beam splitting apparatus 120 can split the first laser beam 110a into multiple second laser beams 120b propagated in different directions. The second laser beams 120b propagated in different directions can detect targets-to-be-detected in different directions, thereby increasing an angle of view and an angular resolution of the lidar. The beam splitting apparatus splits the first laser beam 110a into multiple second laser beams 120b so that the multiple second laser beams are obtained through one laser emitter. In this way, the quantity of laser emitters is greatly reduced, thereby reducing costs and installation difficulty of the lidar. The lidar has a relatively high angle of view and angular resolution, and is cost-effective.

The emitting apparatus 110 serves as a light source, and is configured to generate the first laser beam 110a.

In this embodiment, the lidar has a transceiver module 100. The transceiver module 100 includes the emitting apparatus 110, the beam splitting apparatus 120, and the receiving apparatus 130.

Specifically, the transceiver module 100 includes an emitting structure 101 and the receiving apparatus 130. The emitting structure 101 includes the emitting apparatus and the beam splitting apparatus 120.

As shown in FIG. 2, in this embodiment, the emitting apparatus 110 has a scanning rotation axis 111 that intersects with a propagation direction of the first laser beam 110a. The emitting apparatus 110 is configured to rotate around the scanning rotation axis 111. That is, an angle between the first laser beam 110a and the scanning rotation axis 111 is greater than zero. Therefore, as the emitting apparatus 110 rotates, the propagation direction of the first laser beam 110a will also change. Therefore, the rotation of the emitting apparatus effectively expands a scanning range of the lidar, and helps improve the detection capability of the lidar and expand the detection range of the lidar.

In this embodiment, the lidar further includes: a fixing mechanism 102, where the fixing mechanism 102 is configured to fix the entire lidar; and a rotation mechanism 103, where the rotation mechanism 103 is located between the transceiver module 100 and the fixing mechanism 102, and the rotation mechanism 103 is configured to implement connection between the transceiver module 100 and the fixing mechanism 102.

Specifically, the emitting apparatus 110 is fixed in the transceiver module 100. The rotation mechanism 103 is configured to rotate the transceiver module 100 around the scanning rotation axis 111, so as to enable the emitting apparatus 110 to rotate around the scanning rotation axis 111.

In this embodiment, the lidar is installed on the ground, and the lidar is fixed against the ground. The scanning rotation axis 111 is perpendicular to a horizontal plane. In other embodiments, the lidar may be installed in a vehicle or an aircraft, and the scanning rotation axis may obliquely intersect with the horizontal plane.

As shown in FIG. 3, in this embodiment, the emitting apparatus 110 generates a first laser beam 110a. The emitting apparatus 110 is one laser emitter. Specifically, the emitting apparatus 110 is a solid-state laser emitter or a fiber laser emitter.

In addition, in this embodiment, a wavelength of the first laser beam 110a is in a range of 895 nm to 915 nm, and may be, for example, 905 nm. Laser beams in the range of 895 nm to 915 nm are highly penetrative infrared laser beams and are invisible light. Therefore, reasonable setting of the wavelength range of the first laser beam 110a can effectively reduce interference caused by the lidar to surrounding environments, and can effectively increase the detection distance of the lidar.

However, in other embodiments of the present disclosure, the emitting apparatus 110 may also include other types of laser emitters, and the first laser beam may also be a laser beam in another wavelength range.

The beam splitting apparatus 120 is configured to split a beam, so that the first laser beam 110a is split into multiple second laser beams 120b propagated in different directions.

In this embodiment, the lidar further includes a beam expanding and collimating apparatus 140. The beam expanding and collimating apparatus 140 is disposed in an optical path of the first laser beam 110a between the emitting apparatus 110 and the beam splitting apparatus 120.

The beam expanding and collimating apparatus 140 is configured to expand and collimate the first laser beam 110a, that is, increase a spot diameter of the first laser beam 110a propagated for the same distance, and reduce a divergence angle of the first laser beam 110a.

The beam expanding and collimating apparatus 140 increases the spot diameter of the first laser beam 110a, and therefore, helps receive the echo beams. The beam expanding and collimating apparatus 140 also reduces the divergence angle of the first laser beam 110a, and therefore, improves precision of controlling the propagation direction of the first laser beam 110a, and helps improve detection accuracy of the lidar. Specifically, in this embodiment, the beam expanding and collimating apparatus 140 is a telescope.

The beam splitting apparatus 120 splits one first laser beam 110a into multiple second laser beams 120, and reduces the quantity of laser emitters while increasing the angular resolution of the lidar, thereby reducing costs and assembly difficulty of the lidar and achieving a balance between performance improvement and cost reduction.

As shown in FIG. 3, the beam splitting apparatus 120 has an optical axis 121. An extension direction of the optical axis 121 is consistent with the propagation direction of the formed second laser beams 120b. On the other hand, the emitting apparatus 110 has a scanning rotation axis 111. An angle between the optical axis 121 of the beam splitting apparatus 120 and the scanning rotation axis 111 is greater than 0° and less than or equal to 90°. That is, the optical axis 121 intersects with the scanning rotation axis 111.

As shown in FIG. 3, the optical axis 121 of the beam splitting apparatus 120 intersects with the scanning rotation axis 111 and the scanning rotation axis 111 intersects with the propagation direction of the first laser beam 110a. Therefore, as the emitting apparatus 110 rotates, the propagation direction of the first laser beam 110a changes, and the propagation directions of the multiple second laser beams 120a also change. In this way, the multiple second laser beams 120a can scan a specific space, thereby effectively improving the spatial resolution of the lidar and helping improve the detection capability of the lidar.

In this embodiment, the optical axis 121 is perpendicular to the scanning rotation axis 111, thereby effectively ensuring that the multiple second laser beams 120a can scan a 360° range in a plane perpendicular to the scanning rotation axis 111. This effectively expands an angle of view of the lidar in the plane perpendicular to the scanning rotation axis 111, and helps expand a detection range of the lidar.

In addition, in this embodiment, the beam splitting apparatus 120 has a beam splitting direction 124 perpendicular to the optical axis 121. A plane on which the beam splitting direction 124 and the optical axis 121 are located is a beam splitting plane (not shown in the figure). Projections of the multiple second laser beams 120b on the beam splitting plane are staggered from each other. An angle between the beam splitting direction 124 and the scanning rotation axis 111 is greater than or equal to 0° and less than 90°. That is, the beam splitting direction 124 is prevented from being perpendicular to the scanning rotation axis 111.

With the configuration that prevents the beam splitting direction 124 from being perpendicular to the scanning rotation axis 111, the multiple second laser beams 120b can form a specific divergence angle, thereby effectively improving a vertical angular resolution of the lidar and helping improve the detection capability of the lidar. Therefore, the formed multiple second laser beams 120b include several second laser beams 120b whose propagation directions form different angles against the scanning rotation axis 111, thereby increasing the angular resolution and the angle of view of the lidar in a direction parallel to the scanning rotation axis 111. In other embodiments, the multiple second laser beams include several second laser beams whose propagation directions form the same angle against the rotation axis.

In this embodiment, the beam splitting direction 124 is parallel to the scanning rotation axis 111, thereby effectively expanding divergence angles of the multiple second laser beams 120b, improving the vertical angle of view of the lidar, and helping expand the detection range of the lidar.

Specifically, the lidar is installed on the ground, and the scanning rotation axis 111 is perpendicular to the horizontal plane. Therefore, the optical axis 121 of the beam splitting apparatus 120 is parallel to the horizontal plane. The emitting apparatus 110 rotates around the scanning rotation axis 111 perpendicular to the horizontal plane, so that the multiple second laser beams propagate in various directions in the horizontal plane, thereby effectively increasing the angle of view of the lidar in the horizontal direction and a horizontal angular resolution of the lidar.

Especially in a case that the lidar is applied to transportation equipment such as a vehicle, a larger angle of view in the horizontal direction and a larger horizontal angular resolution can effectively expand the detection range of the lidar and help improve the success rate of the lidar in detecting obstacles around the transportation equipment.

In addition, the beam splitting direction 124 is parallel to the scanning rotation axis 111. Therefore, the beam splitting direction is perpendicular to the horizontal plane, and the beam splitting apparatus 120 can cause one first laser beam 110a to form multiple second laser beams 120b staggered in a direction perpendicular to the horizontal plane. In this way, the vertical angular resolution of the lidar can be increased without increasing the quantity of laser emitters or reducing the vertical angle of view of the lidar. Further, this effectively improves the success rate of the lidar in detecting the obstacles around the transportation equipment, helps achieve a balance between a large angle of view, a high angular resolution, and low manufacturing costs, and helps make the lidar more suitable for application in the transportation field.

Still referring to FIG. 3, the plane perpendicular to the optical axis 121 is a target plane 123. The beam splitting apparatus 120 is also configured to sparsely and densely distribute spots formed by the multiple second laser beams 120b in the target plane 120. That is, the spots formed by casting the multiple second laser beams 120b onto the target plane 123 are non-uniformly distributed.

The beam splitting apparatus 120 is configured in such a way that the spots formed by the second laser beams 120b in the target plane 123 are non-uniformly distributed. Therefore, without increasing the quantity of the second laser beams 120b, more second laser beams 120b are concentrated on a local area of the target plane 123. This increases density of the second laser beams 120b in a local space between the beam splitting apparatus 120 and the target plane 123, and increases the angular resolution in a local space and improves the utilization rate of the second laser beams 120b.

On the other hand, the increase of the angular resolution in a local space, the improvement of the utilization rate of the second laser beams 120b, and the reduction of the quantity of the second laser beams 120b incapable of detection can effectively reduce the quantity of laser emitters while ensuring the local angular resolution, and help reduce manufacturing costs and assembly difficulty, reduce the system load, increase a scanning frequency, and improve performance of the lidar.

In this embodiment, in the target plane 123, the beam splitting apparatus 120 gradually reduces, in a direction away from the optical axis 121, a distribution density of the spots formed by the multiple second laser beams 120b. That is, the beam splitting apparatus 120 can concentrate more second laser beams 120b near the optical axis 121, increase the quantity and density of the second laser beams 120b close to the optical axis 121, and decrease the quantity and density of the second laser beams 120b distant from the optical axis 121.

The practice of concentrating more second laser beams 120b near the optical axis 121 can effectively improve the angular resolution of the lidar in the space near the optical axis 121 without increasing equipment costs or assembly difficulty, helps improve the utilization rate of the second laser beams 120b, and helps achieve a balance between the manufacturing costs and the detection performance.

In this embodiment, the emitting apparatus 110 can rotate around the scanning rotation axis 111, and the propagation directions of the multiple second laser beams 120b intersect with the scanning rotation axis 111. Therefore, in the direction perpendicular to the scanning rotation axis 111, the angular resolution of the lidar is related to a change rate of the propagation directions of the second laser beams 120b, that is, related to a rotation rate of the emitting apparatus 110.

In the plane parallel to the scanning rotation axis 111, the angle of view and the angular resolution of the lidar are related to the quantity of the second laser beams 120b and the spacing between adjacent second laser beams, and are related to the angle between the beam splitting direction and the direction of the scanning rotation axis 111.

In this embodiment, the beam splitting direction 124 is parallel to the direction of the scanning rotation axis 111. Therefore, the divergence angles of the multiple second laser beams 120b can be increased as far as possible without increasing the quantity of the second laser beams 120b, so as to obtain a relatively large vertical angle of view. With more second laser beams 120b concentrated near the optical axis 121, the spacing between the adjacent second laser beams 120b near the optical axis 121 can be reduced while ensuring a relatively large vertical angle of view, so as to increase the vertical angular resolution.

Specifically, in this embodiment, the lidar is installed on the ground, the scanning rotation axis 111 is perpendicular to the horizontal plane, the optical axis 121 is parallel to the horizontal plane, and the beam splitting direction 124 is perpendicular to the horizontal plane. The practice of concentrating more second laser beams 120b near the optical axis 121 effectively increases the vertical angular resolution of the lidar in the space near the horizontal plane, and helps increase the success rate of the lidar in detecting obstacles near the horizontal plane.

Especially in a case that the lidar is applied to transportation equipment such as a vehicle, the object to be detected is generally a pedestrian, a vehicle, or another obstacle near the bottom of the equipment. Therefore, with more second laser beams 120b concentrated near the optical axis 121, that is, with more second laser beams 120b concentrated near the ground, the vertical angular resolution of the lidar is increased without increasing the manufacturing costs or assembly difficulty or reducing the vertical angle of view, the spatial distribution of the multiple second laser beams 120b is more suitable for real traffic environments, and the lidar is more suitable for application in the transportation field.

On the other hand, the increase of the vertical angular resolution near the horizontal plane and the bottom of the equipment can reduce the quantity of laser emitters while ensuring the vertical angular resolution and help reduce the manufacturing costs and assembly difficulty, reduce the system load, increase the scanning frequency, and improve the scanning accuracy of the lidar.

In this embodiment, the beam splitting apparatus 120 is a grating.

The grating splits one first laser beam 110a into multiple second laser beams 120b by using diffraction and interference effects of light. Specifically, the beam splitting apparatus 120 is a grating, and the beam splitting apparatus 120 has a first grating period along a first direction. The beam splitting direction 124 of the beam splitting apparatus 120 includes the first direction.

Specifically, a grating principle formula is:

$$d \sin(\theta) = m\lambda$$

where d is a grating period; m is a diffraction order; $\lambda$ is a wavelength of a first laser beam 110a, and $\theta$ is an angle between a second laser beam 120b and a normal line of a grating plane. Therefore, as can be learned from the grating principle formula, $\sin(\theta) = m\lambda/d$.

In a case that the angle is small, a sine function value of the angle is close to a corresponding angle value; in a case that the angle is small, the sine function value of the angle is less than the corresponding angle value, and the larger the angle, the greater the difference between the sine function value of the angle and the corresponding angle value will be.

Therefore, in a case that the diffraction order m of the second laser beam 120b is low, the angle $\theta$ between the second laser beam 120b and the normal line of the grating plane is small, where the angle $\theta$ is in a linear relationship with the diffraction order m of the second laser beam 120b. In a case that the diffraction order m of the second laser beam 120b is high, the angle $\theta$ between the second laser beam 120b and the normal line of the grating plane is larger, where the angle $\theta$ is greater than the sine function value of the angle $\theta$, and even far greater than the linear relationship with the diffraction order m of the second laser beam 120b.

Therefore, as the diffraction order m increases, the angle $\theta$ between the second laser beam 120b and the normal line of the grating plane increases, and differences of angles $\theta$ between the second laser beams 120b of different orders and the normal line of the grating plane gradually increase, that is, the angle between adjacent second laser beams 120b gradually increases. In other words, the second laser beams 120b are more concentrated in the direction of the normal line of the grating plane.

As shown in FIG. 3, in a case that the beam splitting apparatus 120 is configured as a grating, the direction of the normal line of the grating plane is parallel to the optical axis 121. Therefore, the practice of configuring the beam splitting apparatus 120 as a grating can make more second laser beams 120b concentrated on the optical axis 121.

Therefore, the practice of configuring the beam splitting apparatus 120 as a grating not only enables the beam splitting apparatus 120 to implement a function of beam splitting to reduce the quantity of laser emitters, but also enables the second laser beams 120b to be distributed non-uniformly in a sparse and dense manner, and makes the second laser beams 120b more concentrated at the direction of the optical axis 121. This achieves a balance between a low cost, a high angular resolution, and a large angle of view, and helps achieve a balance between cost control and performance improvement.

In addition, by using grating to split beams, the quantity of optical components is small, and a structure of the optical path is simple, thereby helping improve optical path precision of the lidar. In addition, a manufacturing process of the grating is mature, and the manufacturing costs are low. The manufacturing costs of the beam splitting apparatus 120 can be effectively reduced by configuring the beam splitting apparatus 120 as a grating.

Specifically, the beam splitting apparatus 120 is a Dammann grating.

The Dammann grating is a phase grating with unequal pitches and a periodically repetitive structure. The Dammam grating is a diffractive optical component capable of splitting a single beam into several equal-intensity beams. Therefore, the practice of configuring the beam splitting apparatus 120 as a Dammann grating can split one first laser beam 110a into multiple equal-intensity second laser beams 120b propagated in different directions. This effectively improves uniformity of intensity of the multiple second laser beams 120b, and avoids a circumstance in which one of the multiple second laser beams 120b is too weak to be detected. This effectively ensures detection distances of the multiple second laser beams 120b, ensures that the receiving apparatus 130 successfully detects the echo beams, and helps increase the detection distance of the lidar, achieve a balance between a high vertical angular resolution and a long detection distance, and improve the precision and accuracy of detection performed by the lidar on the object to be detected.

Specifically, the Dammann grating includes multiple first regions and second regions arranged alternately. While a beam penetrates the Dammann grating, a difference of $\pi$ radians exists between a delayed phase of the beam penetrating the first region and a delayed phase of the beam penetrating the second region. A distance between adjacent first regions or a distance between adjacent second regions is a grating period of the grating. Widths of multiple first regions of the Dammann grating are different, and widths of multiple second regions are different. By reasonably designing the grating period, the widths of the first regions, and the widths of the second regions of the Dammann grating, the intensity of the generated multiple second laser beams is equal.

In this embodiment, the beam splitting apparatus 120 is a one-dimensional Dammann grating. Therefore, in the beam splitting apparatus 120, the first regions and the second regions take on a stripe shape, with extension directions thereof being parallel. The extension directions of the first regions and the second regions are perpendicular to the beam splitting direction; and the beam splitting direction 124 is perpendicular to the horizontal plane. Therefore, the extension directions of the first regions and the second regions are parallel to the horizontal plane.

In addition, with a larger quantity of equal-intensity beams formed by the Dammann grating from the beam splitting, that is, with a larger quantity of the second laser beams 120b into which the first laser beam 110a is split by the beam splitting apparatus 120, the angle of view of the lidar will be larger, and the angular resolution will be higher.

In this embodiment, the beam splitting apparatus 120 is a one-dimensional Dammann grating. Costs of design and manufacturing of the one-dimensional Dammann grating are relatively low, so that the manufacturing costs of the lidar can be effectively controlled. Specifically, the beam splitting apparatus 120 is a 1×9 beam-splitting Dammann grating. In other embodiments of the present disclosure, the beam splitting apparatus 120 may also be configured as a 1×5, 1×15, 1×32, or 1×64 beam-splitting Dammann grating.

In addition, according to a grating principle equation, the angle $\theta$ between the second laser beam 120b and the normal line of the grating plane is related to the diffraction order m, the wavelength $\lambda$ of the first laser beam 110a, and the grating period d. Therefore, with the wavelength $\lambda$ of the first laser beam 110a being definite, with parameters of the beam splitting apparatus 120 being definite, the angles $\theta$ between the second laser beams 120b of different orders and the normal line of the grating plane are different, so that multiple second laser beams 120b propagated in different directions can be obtained.

Therefore, in this embodiment, the grating period of the one-dimensional Dammann grating is in a range of 47 $\mu$m to 57 $\mu$m, for example, may be 52 $\mu$m. Specifically, in this embodiment, phase turning points of the beam splitting apparatus 120 are 0.06668, 0.12871, 0.28589, 0.45666, and 0.59090.

In other embodiments of the present disclosure, the beam splitting apparatus may also be configured as a two-dimensional Dammann grating. The two-dimensional Dammann grating can make a horizontal emitting angle of the second laser beam different from a vertical emitting angle of the second laser beam, so as to increase the vertical angular resolution and the horizontal angular resolution of the lidar. The horizontal direction is a direction parallel to the horizontal plane, and the vertical direction is a direction perpendicular to the horizontal plane.

Still refer to FIG. 2, FIG. 3, and FIG. 4, where FIG. 4 is a schematic diagram of optical paths of a receiving part of the lidar embodiment shown in FIG. 2.

The formed multiple second laser beams 120b are emitted from an emitting structure 101. At least a part of the second laser beams 120b is cast onto an object to be detected, and forms echo beams 130c after being reflected by the object to be detected. The receiving apparatus 130 receives the echo beams 130c. Information on the object to be detected is obtained by analyzing the received echo beams 130c.

As shown in FIG. 4, in this embodiment, the receiving apparatus 130 includes multiple detectors 131. Each detector 131 is configured to receive an echo beam 130c formed by the object-to-be-detected by reflecting a corresponding second laser beam. Specifically, the detector 131 is a photodiode, a photomultiplier tube, an avalanche photodiode, or an infrared and visible light detection device, or the like.

In addition, the receiving apparatus 130 further includes a receiving convergence lens 132. The receiving convergence lens 132 is configured to converge the echo beams 130c to the detector 131. A distance from the beam splitting apparatus 131 to a focal plane of the receiving convergence lens 132 is less than a half of a focal depth of the receiving convergence lens 132. Specifically, in this embodiment, the beam splitting apparatus 131 is located at the focal plane of the receiving convergence lens 132.

The echo beams 130c formed by the second laser beams 120b propagated in the same direction are transmitted through the receiving convergence lens 132 and converged to a surface of the same detector 131. The echo beams 130c formed by the second laser beams 120b propagated in different directions are transmitted through the receiving convergence lens 132 and converged to different detectors 131. Therefore, an orientation of the object to be detected can be obtained according to the propagation direction of the echo beams 130c.

The receiving apparatus 130 is separated from the emitting structure 101. With the receiving device 130 being separated from the emitting structure 101, the echo beams 130c are prevented from passing through the beam splitting apparatus 120. This prevents the beam splitting apparatus 120 from affecting the propagation direction of the echo beams 130c, and helps determine the location of the object to be detected.

In addition, in this embodiment, the receiving apparatus 130 further includes an analysis apparatus (not shown in the figure). After receiving the echo beams 130c, the detector 131 converts optical signals of the echo beams 130c into electrical signals. The analysis apparatus is configured to analyze the electrical signals to obtain the location of the object to be detected.

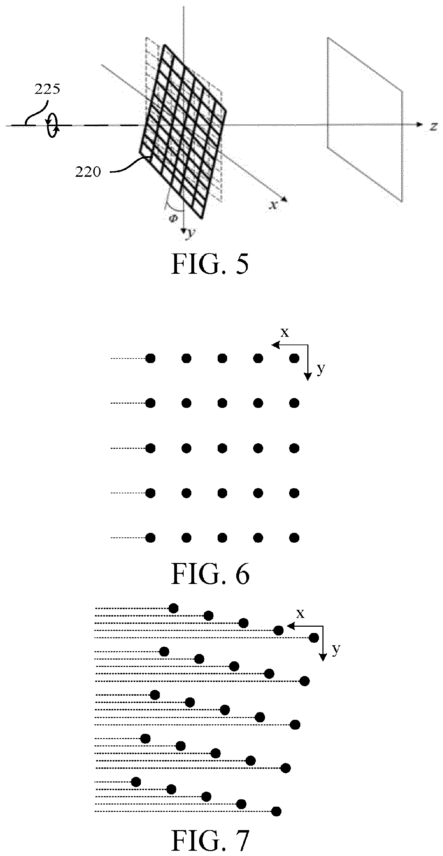

Refer to FIG. 5, which is a partial schematic structural diagram of a second embodiment of a lidar according to the present disclosure.

The content in this embodiment that is the same as that in the first embodiment is omitted here. The differences between this embodiment and the preceding embodiments are as follows. First, in this embodiment, the beam splitting apparatus 220 has an adjustment axis 225 parallel to the optical axis (not shown in the figure); and the beam splitting apparatus 220 is configured to rotate around the adjustment axis 225 to change the propagation directions of the multiple second laser beams.

The rotation of the beam splitting apparatus 220 can change the propagation directions of the multiple second laser beams so as to adjust the angular resolution of the lidar. In addition, the rotation of the beam splitting apparatus 220 can also stagger the partially overlapping second laser beams, so as to increase the angular resolution. Therefore, the practice of configuring the beam splitting apparatus 220 to be rotatable achieves a balance between a high angular resolution and a large angle of view of the lidar under different environmental requirements, and helps improve precision and accuracy of detection of the lidar.

In addition, in this embodiment, the beam splitting apparatus 220 is a two-dimensional grating. Therefore, the beam splitting apparatus 220 has a first grating period $d_1$ along a first direction and a second grating period $d_2$ along a second direction, and the second direction is perpendicular to the first direction. Specifically, the beam splitting apparatus 220 is a two-dimensional Dammann grating.

The first regions and the second regions of the two-dimensional Dammann grating are arranged in a matrix form along the first direction and the second direction respectively. The first grating period $d_1$ is a distance between adjacent first regions in the first direction, or a distance between adjacent second regions in the first direction. The second grating period $d_2$ is a distance between adjacent first regions in the second direction, or a distance between adjacent second regions in the second direction. Widths of multiple first regions of the Dammann grating are different, and widths of multiple second regions are also different. By reasonably designing the first grating period $d_1$, the second grating period $d_2$, the widths of the first regions, and the widths of the second regions of the Dammann grating, the intensity of the generated multiple second laser beams is equal.

According to the grating principle equation, in a case that the beam splitting apparatus 220 is configured as a grating, emitting angles of the multiple second laser beams formed by the beam splitting apparatus 220 by splitting are related to the wavelength λ of the first laser beam and parameters of the beam splitting apparatus 220. Specifically, in this embodiment, the wavelength λ of the first laser beam is in a range of 895 nm to 915 nm, and may be, for example, 905 nm. The first grating period $d_1$ of the beam splitting apparatus 220 is in a range of 47 μm to 57 μm, and may be, for example, 52 μm. The second grating period $d_2$ is in a range of 47 μm to 57 μm, and may be, for example, 52 μm.

Specifically, as shown in FIG. 5, for clear analysis, a rectangular coordinate system is established on the beam splitting apparatus 220: an x direction and a y direction that are perpendicular to each other are located in the grating plane of the beam splitting apparatus 220, and a normal direction of the grating plane of the beam splitting apparatus 220 is a z direction. Therefore, the z direction is parallel to the optical axis direction.

In this embodiment, the lidar is installed on the ground, and the optical axis is parallel to the horizontal plane. Therefore, the y direction is perpendicular to the horizontal plane, and the x direction is parallel to the horizontal plane. That is, a plane defined by the x direction and the z direction is parallel to the horizontal plane.

In addition, in this embodiment, the adjustment axis 225 of the beam splitting apparatus 220 is parallel to the optical axis. Therefore, the z axis is parallel to the adjustment axis 225. The rotation of the beam splitting apparatus 220 around the adjustment axis 225 is to rotate in an x-y plane by using the z direction as a rotation axis. A change of the angle between the first direction of the beam splitting apparatus 220 and the y direction gives rise to an angle at which the beam splitting apparatus 220 rotates around the adjustment axis 225.

With the first laser beam simplified into a plane wave, an emitting second laser beam (only considering phase terms related to the propagation direction) can be expressed as:

$$E = \exp\left(j(k_x x + k_y y + k_z z)\right)$$

wherein, in a case that the first direction is parallel to the y direction, that is, the angle between the first direction and the y direction is 0°:

$$k_x = n_x \frac{2\pi}{d_2}$$

$$k_y = n_y \frac{2\pi}{d_1}$$

$$k_z = \sqrt{k^2 - k_x^2 - k_y^2}$$

where $d_1$ is the first grating period; $d_2$ is the second grating period, and $n_x$ and $n_y$ represent a diffraction order in the x direction and the y direction respectively.

Therefore, according to the grating principle formula, the angle $\theta$ between the propagation direction of the second laser beam and the normal line of the grating plane is:

$$\theta_y = \arcsin\left(\frac{k_y}{k}\right) = \arcsin\left(n_y \frac{\lambda}{d_1}\right).$$

As can be seen from the above formula, with different diffraction orders $n_y$ in the y direction, the angle between adjacent second laser beams is different. However, because the first grating period $d_1$ is much greater than the wavelength of the first laser beam, the angles between adjacent second laser beams with different diffraction orders $n_y$ in the y direction are approximately equal. The spots formed by the multiple second laser beams on the target plane are arranged in a matrix form. FIG. 6 is a schematic diagram of spots formed on a target plane when an angle between a first direction and a positive direction of y is 0° in the lidar embodiment shown in FIG. 5.

In a case that the first direction is not parallel to the y direction and an acute angle between the first direction and the y direction is $\varphi$, the formed second laser beams (only considering the phase terms related to the propagation direction) may be expressed as:

$$E = \exp\left(j(k_x x + k_y y + k_z z)\right)$$

wherein

$$k_x = n_x \frac{2\pi}{d_2} \cos\varphi + n_y \frac{2\pi}{d_1} \sin\varphi$$

$$k_y = n_x \frac{2\pi}{d_2} \sin\varphi + n_y \frac{2\pi}{d_1} \cos\varphi$$

$$k_z = \sqrt{k^2 - k_x^2 - k_y^2}.$$

Therefore, according to the grating principle formula, the angle $\theta$ between the propagation direction of the second laser beam and the normal line of the grating plane is:

$$\theta_y = \arcsin\left(\frac{k_y}{k}\right) = \arcsin\left(n_y \frac{\lambda}{d_1}\cos\varphi + n_x \frac{\lambda}{d_2}\sin\varphi\right).$$

The spots formed by the multiple second laser beams on the target plane are still arranged in a matrix form. However, as the beam splitting apparatus 220 rotates, the matrix formed by the spots also rotates accordingly. FIG. 7 is a schematic diagram of spots formed on a target plane when an acute angle between a first direction and a y direction is φ in the lidar embodiment shown in FIG. 5.

As shown in FIG. 6 and FIG. 7, the spots arranged along the x direction are staggered as the beam splitting apparatus 220 rotates. Each spot on the target plane corresponds to one second laser beam. The greater the distance between adjacent spots in the y direction, the larger the angle between the corresponding second laser beam and the horizontal plane will be. The larger the quantity of second laser beams having different angles between the second laser beams and the horizontal plane, the higher the vertical angular resolution of the lidar will be.

Therefore, as the beam splitting apparatus 220 rotates, more second laser beams have different angles between the second laser beams and the horizontal plane. That is, the rotation of the beam splitting apparatus 220 can effectively increase the vertical angular resolution of the lidar. Therefore, the practice of configuring the beam splitting apparatus 220 to be rotatable can increase the angular resolution of the lidar under different environmental requirements, and help improve precision and accuracy of detection of the lidar.

In this embodiment, the beam splitting apparatus 220 is an m×n beam-splitting two-dimensional Dammann grating, m is the quantity of second laser beams formed along the first direction, and n is the quantity of second laser beams formed along the second direction.

According to the grating principle equation, approximately the acute angle φ between the first direction and the y direction is: $\arctan\left(\dfrac{\arcsin\left(\dfrac{\lambda}{d_1}\right)}{m\times\arcsin\left[\dfrac{\lambda}{d_2}\right]}\right).$

Further, in this embodiment, an initial location is where the beam splitting apparatus 220 is located when the first direction is parallel to the y direction, that is, when the angle φ between the first direction and the y direction is 0°. A change of the angle between the first direction of the beam splitting apparatus 220 and the y direction gives rise to an angle at which the beam splitting apparatus 220 rotates around the adjustment axis 225. Therefore, the acute angle φ between the first direction and the y direction is an angle at which the beam splitting apparatus 220 rotates around the adjustment axis 225.

In this embodiment, the angle at which the beam splitting apparatus 220 rotates around the adjustment axis 225 is in a range of $0.9\arctan\left(\dfrac{\arcsin\left(\dfrac{\lambda}{d_1}\right)}{m\times\arcsin\left[\dfrac{\lambda}{d_2}\right]}\right)$ to $1.1\arctan\left(\dfrac{\arcsin\left(\dfrac{\lambda}{d_1}\right)}{m\times\arcsin\left[\dfrac{\lambda}{d_2}\right]}\right),$ that is, the acute angle φ between the first direction and the y direction is in the range of $0.9\arctan\left(\dfrac{\arcsin\left(\dfrac{\lambda}{d_1}\right)}{m\times\arcsin\left[\dfrac{\lambda}{d_2}\right]}\right)$ to $1.1\arctan\left(\dfrac{\arcsin\left(\dfrac{\lambda}{d_1}\right)}{m\times\arcsin\left[\dfrac{\lambda}{d_2}\right]}\right)$ With a reasonably set rotation angle range of the beam splitting apparatus 220, not only the angular resolution of the lidar is increased, but also distances between adjacent spots along the y direction are close to each other, thereby achieving equal angles between adjacent second laser beams, improving uniformity of distribution of the second laser beams in the vertical direction, and helping improve performance of the lidar.

Specifically, in this embodiment, the beam splitting apparatus 220 is a 32×32 beam splitter, the first grating period $d_1$ and the second grating period $d_2$ are 52 $\mu$m, and the wavelength of the first laser beam is 905 nm. Along the y direction, the angle of view of the lidar is approximately 30°, the angle between the second laser beams and the horizontal plane is in a range of -20° to +10°, and the angles between the adjacent second laser beams are approximately equal. Therefore, before rotation, the vertical angular resolution of the lidar is approximately 0.9375° (30°/32); after rotation, the vertical angular resolution of the lidar is approximately 0.0293° (30°/(32×32)). As can be seen, the lidar has a very high angular resolution in the direction parallel to the rotation axis. In other embodiments of the present disclosure, the beam splitting apparatus may also be a 5×5, 8×8, 16×16, or 5×8 beam-splitting Dammann grating.

In this embodiment, the beam splitting apparatus is configured as a two-dimensional grating. However, this practice is only an example. In other embodiments of the present disclosure, the beam splitting apparatus may also be configured as a one-dimensional grating, so as to reduce the cost and difficulty of the manufacturing process of the grating, and achieve the purpose of cost control. Specifically, the beam splitting apparatus may also be configured as a one-dimensional Dammann grating.

In a case that the beam splitting apparatus is configured as a one-dimensional grating, the beam splitting apparatus has a first grating period $d_1$ along the first direction, and the angle between the propagation direction of the formed second laser beams and the y direction is:

$$\theta_y = \arcsin\left(\frac{k_y}{k}\right) = \arcsin\left(n_y \frac{\lambda}{d_1} \cos\varphi\right)$$

where $\lambda$ is the wavelength of the first laser beam, $\varphi$ is the acute angle between the first direction of the beam splitting apparatus and the y direction, and $n_y$ is the diffraction order in the y direction.

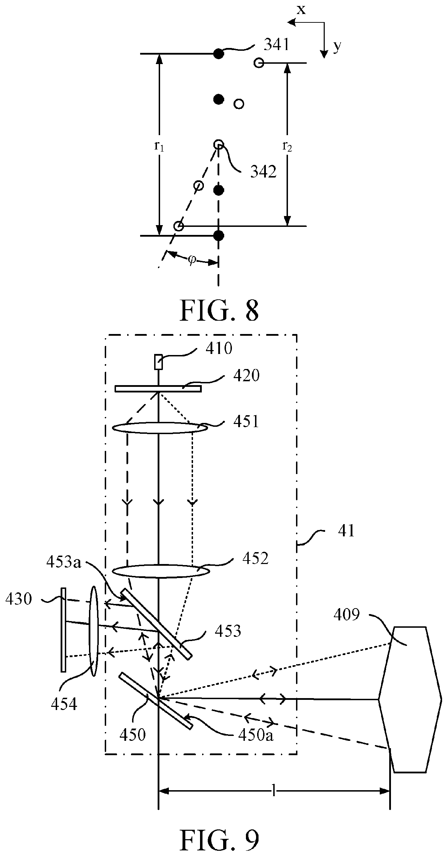

FIG. 8 is a schematic diagram of spots formed on a target plane in a third embodiment of a lidar according to the present disclosure. In the figure, the spot 341 is a spot formed when the acute angle between the first direction of the beam splitting apparatus and the y direction is 0; and the spot 342 is a spot formed when the acute angle between the first direction of the beam splitting apparatus and the y direction is $\varphi$.

As the beam splitting apparatus rotates, the distance between adjacent spots in the y direction decreases, the angle between the adjacent second laser beams decreases, while the vertical angular resolution of the lidar increases.

However, as shown in FIG. 8, when the acute angle between the first direction of the beam splitting apparatus and the y direction is 0°, a longest distance between the multiple spots 341 in the y direction is $r_1$; when the acute angle between the first direction of the beam splitting apparatus and the y direction is $\varphi$, a longest distance between the multiple spots 342 in the y direction is r2. Obviously, $r_1$ is greater than r2. In the y direction, the longest distance between the spots is related to the vertical angle of view of the lidar. In the y direction, the greater the longest distance between the spots, the greater the vertical angle of view will be. Therefore, in this embodiment, as the beam splitting apparatus rotates, the vertical angle of view of the lidar decreases.

In this embodiment, the beam splitting apparatus is a one-dimensional grating, and the beam splitting apparatus has a first grating period along the first direction. The first grating period is d, the wavelength of the first laser beam is $\lambda$, the beam splitting apparatus is a m×1 beam-splitting grating, and m is the quantity of beams into which the laser beam is split along the first direction. The angle at which the beam splitting apparatus rotates around the adjustment axis is less than $\arccos\left(\dfrac{d \sin\dfrac{\alpha}{m}}{\lambda}\right)$, where $\alpha$ is a preset angle of view. With a reasonably set rotation angle of the beam splitting apparatus, the angle of view is larger than a preset angle of view $\alpha$, so that the lidar has a relatively large angle of view while maintaining a relatively high angular resolution. Specifically, in this embodiment, the preset angle of view $\alpha$ is greater than or equal to 5°.

In the second embodiment and the third embodiment, the beam splitting apparatus can rotate around the adjustment axis. That is, the angle between the first direction of the beam splitting apparatus and the y direction is adjustable to adapt to different application environments. However, in other embodiments of the present disclosure, the location of the beam splitting apparatus may also be fixed. That is, the angle between the first direction of the beam splitting apparatus and the y direction is a fixed value, so as to improve stability and accuracy of an optical path system of the lidar and improve the performance of lidar.

In a case that the location of the beam splitting apparatus is fixed, the angle between the first direction of the beam splitting apparatus and the y direction may be set to a specific value to reduce the angle between adjacent second laser beams in the y direction and improve the angular resolution in the y direction in the case that the quantity of the second laser beams is limited.

Specifically, in other embodiments of the present disclosure, the emitting apparatus has a scanning rotation axis that intersects with a propagation direction of the first laser beam, and the emitting apparatus is configured to rotate around the scanning rotation axis. The beam splitting apparatus has at least one beam splitting direction perpendicular to the optical axis, and a plane on which the beam splitting direction and the optical axis are located is a beam splitting plane. Projections of the multiple second laser beams on at least one beam splitting plane are staggered from each other. An angle between the beam splitting direction and the scanning rotation axis is greater than or equal to 0° and less than 90°. The beam splitting apparatus is a grating, and the beam splitting apparatus has a first grating period along a first direction. The beam splitting direction is the first direction. Therefore, in a case that the beam splitting apparatus is a grating, the beam splitting apparatus may be configured in such a way that the angle between the first direction and the scanning rotation axis is greater than or equal to 0° and less than 90°, so that the second laser beams are as staggered as possible along the direction of the scanning rotation axis, thereby improving the angular resolution along the direction of the scanning rotation axis in the case that the quantity of the second laser beams is limited.

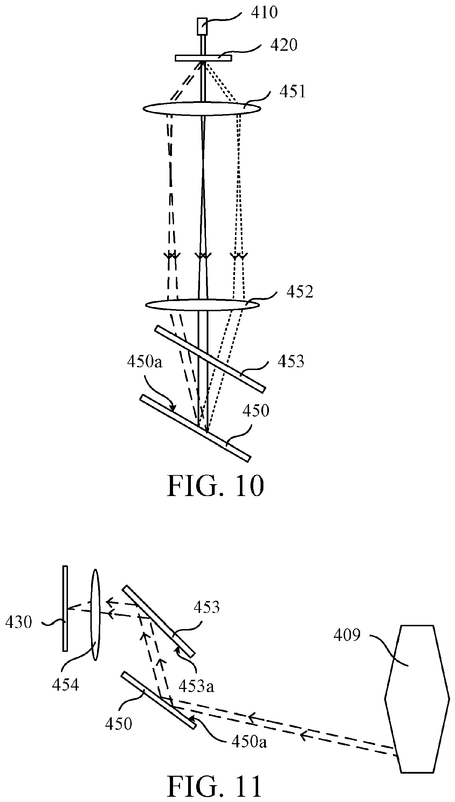

Refer to FIG. 9 to FIG. 11, which are schematic diagrams of optical paths of a fourth embodiment of a lidar according to the present disclosure. FIG. 10 is a schematic diagram of enlarged optical paths of a first laser beam and second laser beams in a region 41 in the lidar embodiment shown in FIG. 9; and FIG. 11 is a schematic diagram of enlarged optical paths of echo beams in the lidar embodiment shown in FIG. 9.

As shown in FIG. 9 to FIG. 11, the content in this embodiment that is the same as that in the preceding embodiments is omitted here. The difference between this embodiment and the preceding embodiments lies in that that, in this embodiment, the lidar further includes: a galvanometer 450, where the galvanometer 450 includes a first reflection surface 450a, and the first reflection surface 450a is configured to reflect the second laser beams; and the galvanometer 450 has a vibrating rotation axis (not shown in the figure), the galvanometer 450 is configured to rotate around the vibrating rotation axis, and an angle between the vibrating rotation axis and a normal line of the first reflection surface 450a is greater than zero.

The rotation of the galvanometer 450 around the vibrating rotation axis changes the propagation directions of the second laser beams reflected by the first reflection surface 450a, thereby expanding scanning ranges of the second laser beams and increasing the angle of view of the lidar. In addition, as long as the rotation of the galvanometer 450 ensures that a range of a minimum angle between the second laser beams before the rotation is scanned, the obtained angle of view can reach a range of a maximum angle between the second laser beams. Therefore, the combination of the galvanometer 450 and the beam splitting apparatus 420 enables obtaining of a relatively large angle of view by using a relatively small rotation angle of the galvanometer 450. Therefore, under the same angle-of-view requirements, the rotation angle of the galvanometer 450 is effectively reduced, and the rotation period of the galvanometer 450 is decreased, thereby helping increase a scanning frame frequency of the lidar.

In this embodiment, the beam splitting apparatus 420 is a one-dimensional grating. Specifically, the beam splitting apparatus 420 is a one-dimensional Dammann grating. The multiple second laser beams formed by the beam splitting apparatus 420 by splitting are located in the same plane.

A plane on which the multiple second laser beams projected onto the first reflection surface 450a are located is a propagation plane (not shown in the figure), an intersection line exists between the first reflection surface 450a and the propagation plane, and an angle between the vibrating rotation axis and the intersection line is greater than 0°. In this embodiment, the angle between the vibrating rotation axis and the intersection line is 90°.

In addition, the emitting apparatus 410 has a scanning rotation axis (not shown in the figure) that intersects with a propagation direction of the first laser beam, and the emitting apparatus 410 is configured to rotate around the scanning rotation axis. An angle between the vibrating rotation axis and the scanning rotation axis is greater than 0°. In this embodiment, the angle between the vibrating rotation axis and the scanning rotation axis is 90°.

In this embodiment, the vibrating rotation axis is parallel to the first reflection surface 450a. The vibrating rotation axis being parallel to the first reflection surface 450a helps install the galvanometer 450. In other embodiments, an acute angle may exist between the vibrating rotation axis and the first reflection surface.

Specifically, in this embodiment, the galvanometer 260 is a laser scanning galvanometer or a microelectromechanical scanning galvanometer.

As shown in FIG. 9 and FIG. 10, in this embodiment, the lidar further includes: a collimation lens 451, where the collimation lens 451 is configured to collimate the multiple second laser beams so that propagation directions of the multiple second laser beams are parallel; and a focusing lens 452, where the focusing lens 452 is configured to converge the collimated second laser beams to the first reflection surface 450a of the galvanometer 450.

A distance between the beam splitting apparatus 420 and a focal point of the collimation lens 451 is less than a half of a focal depth of the collimation lens 451. Specifically, the beam splitting apparatus 420 is located at a focal plane of the collimation lens 451.

A distance between the galvanometer 450 and the focusing lens 452 is less than a half of a focal depth of the focusing lens 452. Specifically, in this embodiment, the galvanometer 450 is located at a focal plane of the focusing lens 452.

A focal point of the focusing lens 452 coincides with a focal point of the collimation lens 451, and an optical axis of the focusing lens 452 coincides with an optical axis of the collimation lens 451. The configuration of the collimation lens 451 and the focusing lens 452 increases the quantity of the second laser beams converged onto the first reflection surface of the galvanometer 450, and therefore, increases the quantity of second laser beams reflected by the galvanometer 450, and expand the angle of view of the lidar.

In this embodiment, the first beam is a linearly polarized beam. Polarization of the linearly polarized beam is directional, and a depolarization degree of the lidar is low. Therefore, stray beams with different polarization directions can be filtered out according to the polarization direction of the first beam, thereby improving a signal-to-noise ratio of the lidar.

In addition, as shown in FIG. 9 and FIG. 11, the lidar further includes: a transflective mirror 453, where the transflective mirror 453 is configured to allow at least a part of the second laser beams to be transmitted and incident on the first reflection surface 450a of the galvanometer 450. The transflective mirror 453 includes a second reflection surface 453a, where the second reflection surface 453a is configured to reflect the echo beams, which are reflected by the galvanometer 450, into the receiving apparatus 430.

The transflective mirror 453 can separate the echo beams from the second laser beams, thereby preventing interference caused by the second laser beams on the receiving apparatus 430, reducing impact caused by the second laser beams on a detection result, and improving precision of the lidar. Further, overlapping of optical paths may be implemented by using the transflective mirror, thereby shortening the optical path of the lidar, effectively reducing a size of an optical system, and helping reduce the size of the lidar. As shown in FIG. 9, the second reflective surface 453a of the transflective mirror 453 faces the first reflection surface 450a of the galvanometer 450.

In addition, in this embodiment, the lidar further includes: a receiving convergence lens 454, configured to converge the echo beams, which are emitted from the transflective mirror 453, into the receiving apparatus 430. A distance between the receiving apparatus 430 and a focal point of the receiving convergence lens 454 is less than a half of a focal depth of the second focusing lens 454.

A distance between the receiving convergence lens 454 and the detector is less than a half of a focal depth of the receiving convergence lens 454. Specifically, in this embodiment, the detector is located at the focal plane of the receiving convergence lens 454.

The lidar can obtain a large angle of view through a small rotation angle of the galvanometer 260. Performance of the lidar in this embodiment is analyzed below.

In this embodiment, the beam splitting apparatus 420 is configured as a $1 \times 9$ beam-splitting one-dimensional Dammann grating. However, in other embodiments of the present disclosure, the beam splitting apparatus may also be configured as another type of optical component with other parameters, without limiting the present disclosure.

In this embodiment, after being converged by the focusing lens 452, the multiple second laser beams are focused on a center location of the first reflection surface 450a. A plane on which any point on a surface of the object-to-be-detected 409 lies is a target plane. A distance between the target plane and a center location of the first reflection surface 450a is 1. In this embodiment, the target plane is perpendicular to the horizontal plane.

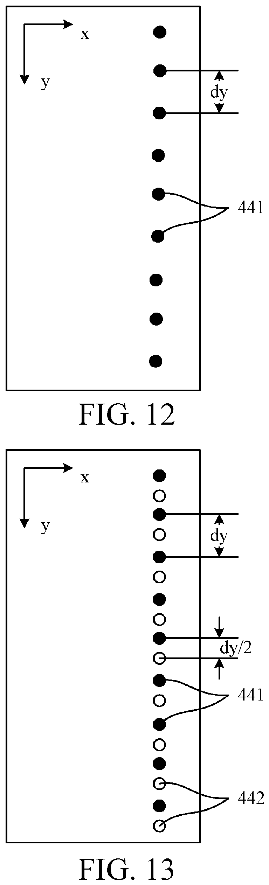

Refer to FIG. 12 to FIG. 14, which are schematic diagrams of spots formed by multiple second laser beams on a target plane when a galvanometer is static in the lidar embodiment shown in FIG. 9.

A rectangular coordinate system is established on the target plane. The established rectangular coordinate system includes: an x direction, a y direction, and a z direction that are perpendicular to each other, where the y direction is parallel to a grating period direction of the beam splitting apparatus 420. That is, the y direction is parallel to a beam splitting direction of the beam splitting apparatus 420.

As shown in FIG. 12, in this embodiment, the multiple second laser beams formed by the beam splitting apparatus 420 by splitting are reflected by the first reflection surface 450a and cast onto the target plane to form multiple spots 441. The multiple spots 441 form a $1 \times 9$ spot array on the target plane. The spot array has an array period dy along the y direction. That is, a spacing between adjacent spots 441 along the y direction is dy.

In this embodiment, to simplify calculation, it is assumed that the vibrating rotation axis is parallel to the horizontal plane, and, when the first reflection surface 450a rotates clockwise around the vibrating rotation axis, the rotation angle of the galvanometer 450 is a positive value; when the first reflection surface 450a rotates counterclockwise around the vibrating rotation axis, the rotation angle of the galvanometer 450 is a negative value.

For a second laser beam, on condition that an incident angle keeps unchanged, when the galvanometer 450 rotates by $\theta$ radians, a normal-direction rotation angle of the first reflection surface 450a is also $+\theta$ radians. According to an optical reflection principle, the rotation angle of the second laser beam reflected by the first reflection surface 450a is $2\theta$ radians.

As shown in FIG. 13, when the galvanometer 450 rotates by $\theta=dy/41$ radians, the rotation angle of the second laser beam reflected by the first reflection surface 450a is $2\theta$=dy/21 radians, and the rotated second laser beam forms a spot 442 on the target plane. The spot 442 is located on a side of the spot 441 in a positive direction of y, and the spacing between the spot 442 and the spot 441 is approximately dy/2.

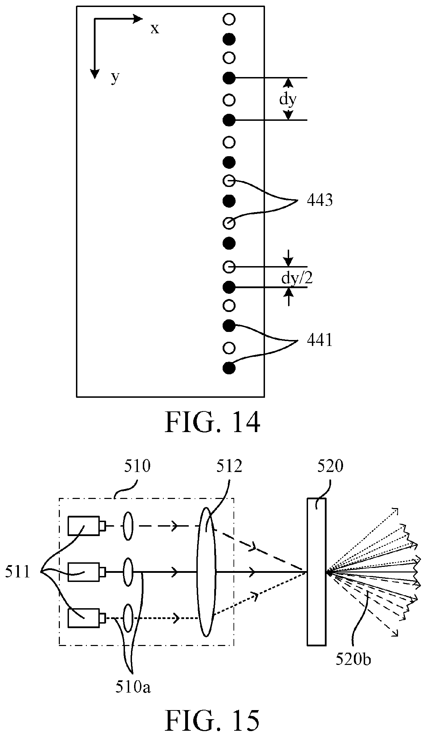

As shown in FIG. 14, when the galvanometer 450 rotates by $\theta$=-dy/41 radians, the rotation angle of the second laser beam reflected by the first reflection surface 450a is $2\theta$=-dy/21 radians, and the rotated second laser beam forms a spot 443 on the target plane. The spot 443 is located on a side of the spot 441 in a negative direction of y, and the spacing between the spot 443 and the spot 441 is approximately dy/2.

As can be learned from FIG. 13 and FIG. 14, in a case that the rotation angle of the galvanometer 450 is between -dy/41 radians and dy/41 radians, all regions between adjacent second laser beams can be scanned by the second laser beams. Therefore, the angle of view of the lidar is a superposition of a maximum rotation angle of the galvanometer 450 a maximum angle between the multiple second laser beams reflected by the galvanometer 450.

In this embodiment, the beam splitting apparatus 420 is configured as a $1\times9$ beam-splitting one-dimensional Dammann grating. In the y direction, the angle of view of the lidar is 9dy/1 radians. Specifically, assuming that dy/1 = 10°, the maximum rotation angle of the galvanometer 450 is 5°, and the angle of view of the lidar in the y direction is 90°. Therefore, a combination of the galvanometer and the beam splitting apparatus can obtain a large angle of view through a small rotation angle of the galvanometer. In addition, under the same angle-of-view requirements, the rotation angle of the galvanometer can be effectively reduced, and a rotation period of the galvanometer can be reduced, thereby helping increase a scanning frame frequency of the lidar.

In this embodiment, when the vibrating rotation axis is parallel to the propagation plane and parallel to the first reflection surface 450a, the galvanometer 450 rotating around the vibrating rotation axis can increase an angle of view of the lidar in a direction perpendicular to the scanning rotation axis. In a case that an acute angle exists between the vibrating rotation axis and the propagation plane, the galvanometer 450 rotating around the vibrating rotation axis can increase angles of view of the lidar in a direction perpendicular to the scanning rotation axis and in a direction parallel to the scanning rotation axis.

In other embodiments of the present disclosure, the beam splitting apparatus may also be a two-dimensional Dammann grating. In a case that the vibrating rotation axis is not perpendicular to the first reflection surface, the galvanometer rotating around the vibrating rotation axis can make the lidar have large angles of view in the direction perpendicular to the scanning rotation axis and in the direction parallel to the scanning rotation axis while the rotation angle of the galvanometer is small, effectively expand the propagation range of the multiple second laser beams, and help increase the angular resolution and the angle of view of the lidar in all directions.

Refer to FIG. 15, which is a schematic structural diagram of a fifth embodiment of a lidar according to the present disclosure.

The content in this embodiment that is the same as that in the preceding embodiments is omitted here. The difference between this embodiment and the preceding embodiments lies in that that, in this embodiment, the emitting apparatus 510 is configured to simultaneously generate multiple first laser beams propagated at different directions.

The beam splitting apparatus 520 enables each first laser beam 510a to be split into multiple second laser beams 520b. Therefore, the generated multiple first laser beams 510a propagated in different directions increase the quantity of the second laser beams 520b to be formed. In addition, the propagation direction varies between all the second laser beams 520b generated out of the first laser beams 510a propagated in different directions, thereby further increasing the angular resolution of the lidar.

Specifically, as shown in FIG. 15, in this embodiment, the emitting apparatus 510 includes: multiple laser emitters 511, where emitting directions of the multiple laser emitters 511 are parallel to each other; a convergence lens 512, where the convergence lens 512 is configured to converge the first laser beams generated by multiple laser emitters 511 to the beam splitting apparatus 520.

The convergence lens 512 enables multiple laser emitters 511 with the same emitting direction to generate the first laser beams 510a to be converged to the beam splitting apparatus 520. This not only reduces installation difficulty of the multiple laser emitters 511, but also generates the first laser beams 510a propagated in different directions, thereby effectively reducing the installation difficulty of the multiple laser emitters 511 and helping reduce the installation cost, effectively improve accuracy of optical paths of the first laser beams 510a, and improve accuracy and precision of detection of the lidar.

In this embodiment, the lidar further has multiple beam expanding and collimating apparatuses (not shown in the figure). The multiple beam expanding and collimating apparatuses are in one-to-one correspondence to the multiple laser emitters 511. Each beam expanding and collimating apparatus is configured to expand and collimate the first laser beam generated by a corresponding laser emitter.

Specifically, in this embodiment, the optical axis of the convergence lens 512 coincides with the optical axis of the beam splitting apparatus 520. Emitting directions of the multiple laser emitters 512 are parallel to the optical axis of the convergence lens 512.

Therefore, the multiple first laser beams 510a generated by the multiple laser emitters 512 are parallel to each other, and parallel to the optical axis of the convergence lens 512. Transmitted through the convergence lens 512, the multiple first laser beams 510a converge on the beam splitting apparatus 520, and an angle between each different first laser beam 510a and the optical axis of the beam splitting apparatus 520 is different. Therefore, the angle between each of the multiple second laser beams 520a, which are generated out of each first laser beam 510a, and the optical axis of the beam splitting apparatus 520 is also different, thereby increasing the angular resolution and the angle of view of the lidar.

Specifically, in this embodiment, the multiple laser emitters 510 are arranged in a direction perpendicular to the horizontal plane, and the beam splitting direction of the beam splitting apparatus 520 is perpendicular to the horizontal plane. Therefore, the generated multiple first laser beams 510a can effectively expand the vertical angle of view of the lidar and increase the vertical angular resolution of the lidar.

In this embodiment, a distance from the beam splitting apparatus 520 to a focal plane of the convergence lens 512 is less than a half of a focal depth of the convergence lens 512. Specifically, the beam splitting apparatus 520 is located at a focal plane of the convergence lens 512.

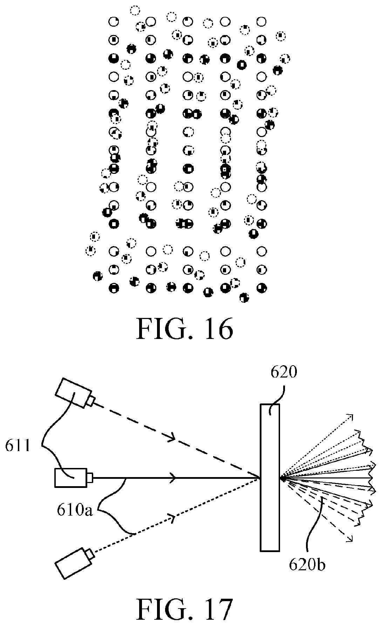

In addition, in this embodiment, the beam splitting apparatus 520 is a two-dimensional grating. Specifically, the beam splitting apparatus 520 is a two-dimensional Dammann grating. Moreover, the beam splitting apparatus 520 is configured to rotate around the adjustment axis parallel to the optical axis. FIG. 16 is a schematic distribution diagram of spots formed on a target plane before and after the beam splitting apparatus 520 rotates around an adjustment axis in this embodiment. As can be seen, the formed multiple first laser beams and the rotation of the beam splitting apparatus 520 can effectively increase the angular resolution of the lidar and effectively expand the angle of view of the lidar.

In this embodiment, the emitting apparatus forms, through the convergence lens 512, multiple first laser beams propagated in different directions. As shown in FIG. 17, in other embodiments of the present disclosure, the emitting apparatus may also include multiple laser emitters 611, and emitting directions of the multiple laser emitters 611 intersect at least pairwise. That is, the emitting directions of the multiple laser emitters 611 are non-parallel or different. This can effectively reduce the quantity of optical components and simplify optical paths of the lidar.

In addition, in the above embodiment, the practice of configuring the beam splitting apparatus as a Dammann grating is only an example. In other embodiments of the present disclosure, the beam splitting apparatus may further include fiber beam splitter, a plane diffraction grating, a blazed grating, or another optical component, or a photonic crystal component designed to meet functional requirements. In addition, the beam splitting apparatus may also be an optical system that includes multiple optical components (such as lenses and spectroscopes). The beam splitting apparatus may be configured as any optical system or optical component capable of splitting, through refraction, reflection, diffraction, or interference of light, one first laser beam into multiple second laser beams propagated in different directions.

The plane diffraction grating and the blazed grating are generally one-dimensional gratings. Therefore, in some embodiments, in a case that the beam splitting apparatus is configured as a plane diffraction grating or a blazed grating, the lidar further includes a scanning device to ensure the angles of view and angular resolutions of the lidar in the horizontal and vertical directions.

Correspondingly, the present disclosure also discloses a lidar working method.

The lidar working method includes: first, performing step S100 to provide a lidar. Referring to FIG. 2 to FIG. 4, the lidar includes: an emitting apparatus 110 (shown in FIG. 3), where the emitting apparatus 110 is configured to generate a first laser beam 110a (shown in FIG. 3); a beam splitting apparatus 120 (shown in FIG. 3), where the beam splitting apparatus 120 is configured to split the first laser beam 110a into multiple second laser beams 120b (shown in FIG. 3) propagated in different directions, and the second laser beams (shown in FIG. 3) are reflected by the object-to-be-detected (not shown in the figure) to form echo beams 130c (shown in FIG. 4); and a receiving apparatus 130 (shown in FIG. 3), where the receiving apparatus 130 is configured to receive the echo beams 130c.

For the specific technical solutions of the lidar, refer to the foregoing specific embodiments of the lidar, and details thereof are omitted here.

Specifically, in this embodiment, the beam splitting apparatus is a Dammann grating, so as to avoid that a specific beam in the multiple second laser beams is too weak to be detected. This effectively ensures sufficient detection distances of the multiple second laser beams, ensures successful detection of the echo beams by the receiving apparatus, and helps improve precision and accuracy of the lidar in detecting the object to be detected.

Subsequently, step S200 is performed so that the emitting apparatus 110 generates a first laser beam 110a. The first laser beam 110a passes through the beam splitting apparatus 120 and is split into multiple second laser beams 120b propagated in different directions. At least a part of the second laser beams 120b arrives at and is reflected by the object-to-be-detected to form echo beams 130c.

In this embodiment, the step of causing the emitting apparatus 110 to generate the first laser beam 110a is to turn on a laser emitter in the emitting apparatus 110 so that the laser emitter generates the first laser beam 110a.

Subsequently, step S300 is performed, and the echo beams 130c are received through the receiving apparatus 130.

As shown in FIG. 4, the receiving apparatus includes multiple detectors 130. Each detector 130 is configured to receive an echo beam 130c formed by the object-to-be-detected by reflecting a corresponding second laser beam (not shown in the figure).

In this embodiment, step S300 in which the echo beams 130c are received through the receiving apparatus includes: The multiple detectors 131 simultaneously receive the echo beams 130c, so as to reduce losses and increase a scanning frequency.

In other embodiments of the present disclosure, step S300 in which the echo beams are received through the receiving apparatus may further include: The multiple detectors sequentially receive corresponding echo beams. Specifically, the multiple detectors may receive the corresponding echo beams in a specific time sequence, thereby preventing interference between different echo beams and ensuring precision and accuracy of detection of the lidar.

The beam splitting apparatus 120 splits the first laser beam 110a into multiple second laser beams 120b so that the multiple second laser beams 120b are obtained through one laser emitter. In this way, the quantity of laser emitters is greatly reduced, thereby reducing costs and installation difficulty of the lidar. The lidar has a relatively high angle of view and angular resolution, and is cost-effective.

Refer to FIG. 5, which is a schematic structural diagram of a lidar disclosed in a second embodiment of a lidar working method according to the present disclosure.

The content in this embodiment that is the same as that in the first embodiment is omitted here. The difference between this embodiment and the preceding embodiments lies in that that, in this embodiment, the beam splitting apparatus 220 has an adjustment axis 225 parallel to the optical axis, and the beam splitting apparatus 220 is configured to rotate around the adjustment axis 225.

Therefore, after step 200 is performed in which the emitting apparatus generates the first laser beam and the first laser beam is split by the beam splitting apparatus 220 into the multiple second laser beams, step S210 is performed, so that the beam splitting apparatus 220 is rotated according to a preset vertical resolution.

According to the foregoing analysis, the rotation of the beam splitting apparatus 220 can effectively adjust the angular resolution and the angle of view of the lidar. Therefore, a preset resolution is set according to different environmental requirements, thereby achieving a balance between a high angular resolution and a large angle of view of the lidar, and helps improve precision and accuracy of detection of the lidar and improve performance of the lidar applied in different environments.

In this embodiment, the beam splitting apparatus 220 is a two-dimensional grating. The beam splitting apparatus 220 has a first grating period along a first direction and a second grating period along a second direction, and the first direction is perpendicular to the second direction. The first grating period is $d_1$, the second grating period is $d_2$, the wavelength of the first laser beam is $\lambda$, the beam splitting apparatus 220 is an $m \times n$ beam-splitting grating, $m$ is the quantity of second laser beams formed along the first direction, and $n$ is the quantity of second laser beams formed along the second direction. In a process of rotating the beam splitting apparatus 220 around the adjustment axis 225, a range of an angle at which the beam splitting apparatus 220 rotates is: $0.9 \arctan\left(\dfrac{\arcsin\left(\dfrac{\lambda}{d_1}\right)}{m \times \arcsin\left[\dfrac{\lambda}{d_2}\right]}\right)$ to $1.1 \arctan\left(\dfrac{\arcsin\left(\dfrac{\lambda}{d_1}\right)}{m \times \arcsin\left[\dfrac{\lambda}{d_2}\right]}\right)$.

With a reasonably adjusted rotation angle range of the beam splitting apparatus 220, not only the angular resolution of the lidar is increased, but also angles between adjacent second laser beams are equal, thereby improving uniformity of distribution of the second laser beams in the vertical direction and helping improve performance of the lidar.

In other embodiments of the present disclosure, the beam splitting apparatus may also be configured as a one-dimensional grating. In a case that the beam splitting apparatus is a one-dimensional grating, and the beam splitting apparatus has a first grating period along a first direction. The first grating period is d, a wavelength of the first laser beam is $\lambda$, the beam splitting apparatus is an $m \times 1$ beam-splitting grating, and $m$ is the quantity of beams into which a laser beam along the first direction is split. In a process of rotating the beam splitting apparatus around the adjustment axis, an angle at which the beam splitting apparatus rotates is less than $\arccos\left(\dfrac{d\sin\dfrac{\alpha}{m}}{\lambda}\right)$, where $\alpha$ is a preset angle of view.

In the process of rotating the beam splitting apparatus around the adjustment axis, the rotation angle of the beam splitting apparatus is controlled reasonably, and the angle of view is larger than a preset angle of view $\alpha$, so that the lidar has a relatively large angle of view while maintaining a relatively high angular resolution. Specifically, in some embodiments, the preset angle of view $\alpha$ is greater than or equal to 5°.

Refer to FIG. 9 to FIG. 11, which are schematic structural diagrams of a lidar disclosed in a third embodiment of a lidar working method according to the present disclosure.

The content in this embodiment that is the same as that in the preceding embodiments is omitted here. The difference between this embodiment and the preceding embodiments lies in that that, in this embodiment, the lidar further includes: a galvanometer, where the galvanometer includes a first reflection surface, and the first reflection surface is configured to reflect the second laser beams. The galvanometer has a vibrating rotation axis, the galvanometer is configured to rotate around the vibrating rotation axis, and an angle between the vibrating rotation axis and a normal line of the first reflection surface is greater than zero.

Therefore, in this embodiment, after step 200 is performed, in which the emitting apparatus is caused to generate the first laser beam, where the first laser beam is split by the beam splitting apparatus into the multiple second laser beams, step 220 is performed, so that the galvanometer is rotated to change propagation directions of the second laser beams reflected from the galvanometer.

A combination of the galvanometer 450 and the beam splitting apparatus 420 can obtain a large angle of view through a small rotation angle of the galvanometer 450. Therefore, under the same angle-of-view requirements, the rotation angle of the galvanometer 450 can be effectively reduced, and a rotation period of the galvanometer 450 can be reduced, thereby helping increase a scanning frame frequency of the lidar.

In this embodiment, the beam splitting apparatus 420 is a grating, the beam splitting apparatus 420 has a first grating period along a first direction, a minimum angle between the second laser beams along the first direction that are reflected by the galvanometer is $\theta_1$, and a scanning rotation axis is perpendicular to the first direction. Therefore, in a process of rotating the galvanometer, a rotation angle of the galvanometer is caused to be greater than or equal to $\theta_1/2$. The small rotation angle of the galvanometer 450 can effectively shorten a vibration period of the galvanometer 450, and help increase a scanning frame frequency of the lidar.

Refer to FIG. 15, which is a schematic structural diagram of a lidar disclosed in a fourth embodiment of a lidar working method according to the present disclosure.

The content in this embodiment that is the same as that in the preceding embodiments is omitted here. The difference between this embodiment and the preceding embodiments lies in that that, in this embodiment, the emitting apparatus is configured to simultaneously generate multiple first laser beams propagated at different directions. The emitting apparatus includes multiple laser emitters.

Therefore, step S200 in which the emitting apparatus 510 is caused to generate the first laser beam 510a includes: turning on, according to a preset resolution, at least one laser emitter to generate at least one first laser beam.

According to the foregoing analysis, the beam splitting apparatus 520 splits each first laser beam 510a into multiple second laser beams 520b, and the propagation direction varies between the multiple second laser beams 520b generated out of the first laser beams 510 propagated in different directions and split by the beam splitting apparatus 520.

On the other hand, the larger the quantity of laser emitters turned on is, the higher the energy consumption of the lidar is, and the heavier the load of the optical system of the lidar is. Therefore, properly setting the quantity of laser emitters to be turned on and properly selecting the laser emitters to be turned on according to the preset resolution can increase the utilization rate of the second laser beams while meeting the resolution requirements, thereby effectively controlling the energy consumption of the lidar, effectively reducing the load of the optical system of the lidar, saving energy, extending the service time, reducing losses, extending the service life, and achieving a balance between the angular resolution and the energy consumption control.

**Claims**

**1.** A lidar, comprising:

an emitting apparatus, configured to generate a first laser beam;

a beam splitting apparatus, configured to split the first laser beam into multiple second laser beams propagated in different directions, wherein
at least a part of the second laser beams is reflected by an object-to-be-detected to form echo beams; and
a receiving apparatus, configured to receive the echo beams.

2. The lidar according to claim 1, **characterized in that** the beam splitting apparatus has an optical axis, and a plane perpendicular to the optical axis is a target plane; and
the beam splitting apparatus is further configured to sparsely and densely distribute spots formed by the multiple second laser beams in the target plane.

3. The lidar according to claim 2, **characterized in that** in the target plane, a distribution density of the spots formed by the second laser beams gradually decreases along a direction away from the optical axis.

4. The lidar according to claim 1, **characterized in that** the beam splitting apparatus has an adjustment axis parallel to the optical axis; and the beam splitting apparatus is configured to rotate around the adjustment axis to change propagation directions of the multiple second laser beams.

5. The lidar according to any one of claims 1 to 4, **characterized in that** the beam splitting apparatus is a grating or a fiber beam splitter.

6. The lidar according to claim 5, **characterized in that** the beam splitting apparatus is a Dammann grating.

7. The lidar according to claim 4, **characterized in that** the beam splitting apparatus is a one-dimensional grating, and the beam splitting apparatus has a first grating period along a first direction;
the first grating period is d, a wavelength of the first laser beam is $\lambda$, the beam splitting apparatus is an $m \times 1$ beam-splitting grating, and m is the quantity of beams into which a laser beam along the first direction is split; and

an angle at which the beam splitting apparatus rotates around the adjustment axis is less than $\arccos\left(\dfrac{d\sin\dfrac{\alpha}{m}}{\lambda}\right)$,

wherein $\alpha$ is a preset angle of view.

8. The lidar according to claim 7, **characterized in that** the first grating period of the beam splitting apparatus is in a range of 47 $\mu$m to 57 $\mu$m; and the wavelength of the first laser beam is in a range of 895 nm to 915 nm.

9. The lidar according to claim 4, **characterized in that** the beam splitting apparatus is a two-dimensional grating, the beam splitting apparatus has a first grating period along a first direction and a second grating period along a second direction, and the first direction is perpendicular to the second direction;
the first grating period is $d_1$, the second grating period is $d_2$, the wavelength of the first laser beam is $\lambda$, the beam splitting apparatus is an $m \times n$ beam-splitting grating, m is the quantity of second laser beams formed along the first direction, and n is the quantity of second laser beams formed along the second direction; and
an angle at which the beam splitting apparatus rotates around the adjustment axis is in a range of

$$0.9\arctan\left(\dfrac{\arcsin\left(\dfrac{\lambda}{d_1}\right)}{m \times \arcsin\left[\dfrac{\lambda}{d_2}\right]}\right) \text{ to } 1.1\arctan\left(\dfrac{\arcsin\left(\dfrac{\lambda}{d_1}\right)}{m \times \arcsin\left[\dfrac{\lambda}{d_2}\right]}\right).$$

10. The lidar according to claim 9, **characterized in that** the first grating period of the beam splitting apparatus is in a range of 47 $\mu$m to 57 $\mu$m; the wavelength of the first laser beam is in a range of 895 nm to 915 nm; and the second grating period is in a range of 47 $\mu$m to 57 $\mu$m.

11. The lidar according to claim 1, **characterized in that** the emitting apparatus has a scanning rotation axis that intersects with a propagation direction of the first laser beam, and the emitting apparatus is configured to rotate around the scanning rotation axis; and

an angle between an optical axis of the beam splitting apparatus and the scanning rotation axis is greater than 0° and less than or equal to 90°.

12. The lidar according to claim 11, **characterized in that** the beam splitting apparatus has at least one beam splitting direction perpendicular to the optical axis, and a plane on which the beam splitting direction and the optical axis are located is a beam splitting plane;

projections of the multiple second laser beams on at least one beam splitting plane are staggered from each other; and

an angle between the beam splitting direction and the scanning rotation axis is greater than or equal to 0° and less than 90°.

13. The lidar according to claim 12, **characterized in that** the beam splitting apparatus is a grating, and the beam splitting apparatus has a first grating period along a first direction; and

the beam splitting direction is the first direction.

14. The lidar according to claim 1, **characterized by** further comprising: a galvanometer, wherein the galvanometer comprises a first reflection surface, and the first reflection surface is configured to reflect the second laser beams; and the galvanometer has a vibrating rotation axis, the galvanometer is configured to rotate around the vibrating rotation axis, and an angle between the vibrating rotation axis and a normal line of the first reflection surface is greater than zero.

15. The lidar according to claim 14, **characterized in that** the beam splitting apparatus is a one-dimensional grating, and the multiple second laser beams are located in the same plane; and

a plane on which the multiple second laser beams projected onto the first reflection surface are located is a propagation plane, an intersection line exists between the first reflection surface and the propagation plane, and an angle between the vibrating rotation axis and the intersection line is greater than 0°.

16. The lidar according to claim 14, **characterized in that** the emitting apparatus has a scanning rotation axis that intersects with a propagation direction of the first laser beam, and the emitting apparatus is configured to rotate around the scanning rotation axis; and

an angle between the vibrating rotation axis and the scanning rotation axis is greater than 0°.

17. The lidar according to claim 14, **characterized by** further comprising a collimation lens, configured to collimate the multiple second laser beams so that propagation directions of the multiple second laser beams are parallel; and

a focusing lens, configured to converge the collimated second laser beams to the first reflection surface of the galvanometer.

18. The lidar according to claim 14, **characterized by** further comprising: a transflective mirror, configured to allow at least a part of the second laser beams to be transmitted and incident on the first reflection surface of the galvanometer; and

the transflective mirror comprises a second reflection surface, configured to reflect the echo beams, which are reflected by the galvanometer, into the receiving apparatus.

19. The lidar according to claim 18, **characterized by** further comprising a receiving convergence lens, configured to converge the echo beams, which are emitted from the transflective mirror, into the receiving apparatus, wherein a distance between the receiving apparatus and a focal point of the receiving convergence lens is less than a half of a focal depth of the receiving convergence lens.

20. The lidar according to claim 1, **characterized in that** the emitting apparatus is configured to simultaneously generate multiple first laser beams propagated in different directions.

21. The lidar according to claim 20, **characterized in that** the emitting apparatus comprises multiple laser emitters, and emitting directions of the multiple laser emitters intersect at least pairwise.

22. The lidar according to claim 20, **characterized in that** the emitting apparatus comprises: multiple laser emitters, wherein emitting directions of the multiple laser emitters are parallel to each other; and a convergence lens, configured to converge first laser beams, which are generated by the multiple laser emitters, to the beam splitting apparatus; and a distance from the beam splitting apparatus to a focal plane of the convergence lens is less than a half of a focal depth of the convergence lens.

23. A lidar working method, **characterized by** comprising:

   providing a lidar, wherein the lidar comprises: an emitting apparatus, configured to generate a first laser beam; a beam splitting apparatus, configured to split the first laser beam into multiple second laser beams propagated in different directions, wherein the second laser beams are reflected by an object-to-be-detected to form echo beams; and a receiving apparatus, configured to receive the echo beams;
   causing the emitting apparatus to generate a first laser beam, wherein the first laser beam passes through and is split by the beam splitting apparatus into multiple second laser beams propagated in different directions;
   at least a part of the second laser beams arrives at and is reflected by the object-to-be-detected to form echo beams; and
   receiving the echo beams through the receiving apparatus.

24. The working method according to claim 23, **characterized in that** the beam splitting apparatus has an adjustment axis parallel to an optical axis; and the beam splitting apparatus is configured to rotate around the adjustment axis; and after the emitting apparatus is caused to generate the first laser beam, wherein the first laser beam is split by the beam splitting apparatus into the multiple second laser beams, the beam splitting apparatus is rotated according to a preset resolution.

25. The working method according to claim 24, **characterized in that** the beam splitting apparatus is a one-dimensional grating, and the beam splitting apparatus has a first grating period along a first direction;
   the first grating period is d, a wavelength of the first laser beam is $\lambda$, the beam splitting apparatus is an $m \times 1$ beam-splitting grating, and m is the quantity of beams into which a laser beam along the first direction is split; and
   in a process of rotating the beam splitting apparatus around the adjustment axis, an angle at which the beam splitting apparatus rotates is less than $\arccos\left(\dfrac{d\sin\dfrac{\alpha}{m}}{\lambda}\right)$, wherein $\alpha$ is a preset angle of view.

26. The working method according to claim 24, **characterized in that** the beam splitting apparatus is a two-dimensional grating, the beam splitting apparatus has a first grating period along a first direction and a second grating period along a second direction, and the first direction is perpendicular to the second direction;
   the first grating period is $d_1$, the second grating period is $d_2$, the wavelength of the first laser beam is $\lambda$, the beam splitting apparatus is an $m \times n$ beam-splitting grating, m is the quantity of second laser beams formed along the first direction, and n is the quantity of second laser beams formed along the second direction; and
   in a process of rotating the beam splitting apparatus around the adjustment axis, a range of an angle at which the beam splitting apparatus rotates is: $0.9\arctan\left(\dfrac{\arcsin\left(\dfrac{\lambda}{d_1}\right)}{m \times \arcsin\left[\dfrac{\lambda}{d_2}\right]}\right)$ to $1.1\arctan\left(\dfrac{\arcsin\left(\dfrac{\lambda}{d_1}\right)}{m \times \arcsin\left[\dfrac{\lambda}{d_2}\right]}\right)$.

27. The working method according to claim 23, **characterized in that** the lidar further comprises:

   a galvanometer, wherein the galvanometer comprises a first reflection surface, and the first reflection surface is configured to reflect the second laser beams; and the galvanometer has a vibrating rotation axis, the galvanometer is configured to rotate around the vibrating rotation axis, and an angle between the vibrating rotation axis and a normal line of the first reflection surface is greater than zero; and
   after the emitting apparatus is caused to generate the first laser beam, wherein the first laser beam is split by the beam splitting apparatus into the multiple second laser beams, the galvanometer is rotated to change propagation directions of the second laser beams reflected from the galvanometer.

28. The working method according to claim 27, **characterized in that** the beam splitting apparatus is a grating, the beam splitting apparatus has a first grating period along a first direction, a minimum angle between the second laser beams along the first direction that are reflected by the galvanometer is $\theta_1$, and a scanning rotation axis is perpendicular to the first direction; and

in a process of rotating the galvanometer, a rotation angle of the galvanometer is caused to be greater than or equal to $\theta_1/2$.

29. The working method according to claim 23, **characterized in that** the emitting apparatus is configured to simultaneously generate multiple first laser beams propagated in different directions; and the emitting apparatus comprises multiple laser emitters; and

the step of causing the emitting apparatus to generate the first laser beam comprises: turning on, according to a preset resolution, at least one laser emitter to generate at least one first laser beam.

30. The working method according to claim 23, **characterized in that** the receiving apparatus comprises multiple detectors, and each detector is configured to receive an echo beam formed by the object-to-be-detected by reflecting a corresponding second laser beam;

a process of receiving the echo beams through the receiving apparatus comprises: simultaneously receiving, by the multiple detectors, the echo beams;

or, sequentially receiving, by the multiple detectors, corresponding echo beams.

31. The working method according to claim 23, **characterized in that** the beam splitting apparatus is a Dammann grating.

FIG. 1

FIG. 2

FIG. 3

FIG. 4

FIG. 5

FIG. 6

FIG. 7

FIG. 8

FIG. 9

410

420

451

452

453

450a

450

FIG. 10

430

453

409

454

453a

450

450a

FIG. 11

FIG. 12

FIG. 13

FIG. 14

FIG. 15

FIG. 16

FIG. 17

## INTERNATIONAL SEARCH REPORT

| International application No. |
| --- |
| **PCT/CN2018/081367** |

**A. CLASSIFICATION OF SUBJECT MATTER**

G01S 17/00(2006.01)i

According to International Patent Classification (IPC) or to both national classification and IPC

**B. FIELDS SEARCHED**

Minimum documentation searched (classification system followed by classification symbols)

G01S

Documentation searched other than minimum documentation to the extent that such documents are included in the fields searched

Electronic data base consulted during the international search (name of data base and, where practicable, search terms used)

WPI, EPODOC, CNPAT, CNKI: 激光, 雷达, 单线, 多线, 分光, 分束, 反射, 回波, 目标, 探测, 接收, 光轴, 稀疏, 达曼, 光栅; laser, radar, multithreading, multi, beam, echo, reflect, object, target, obstacle

**C. DOCUMENTS CONSIDERED TO BE RELEVANT**

| Category* | Citation of document, with indication, where appropriate, of the relevant passages | Relevant to claim No. |
| --- | --- | --- |
| X | CN 104297760 A (HEFEI INSTITUTES OF PHYSICAL SCIENCE, CHINESE ACADEMY OF SCIENCES) 21 January 2015 (2015-01-21) description, paragraphs [0008], [0022], [0023] and [0044], and figures 1-3 | 1-31 |
| A | CN 102749626 A (CHERY AUTOMOBILE CO., LTD.) 24 October 2012 (2012-10-24) entire document | 1-31 |
| A | CN 106684694 A (BEIJING UNIVERSITY OF TECHNOLOGY) 17 May 2017 (2017-05-17) entire document | 1-31 |
| A | CN 206321794 U (SHENZHEN SUTENG INNOVATION TECHNOLOGY CO., LTD.) 11 July 2017 (2017-07-11) entire document | 1-31 |
| A | CN 107153194 A (SHENZHEN SUTENG INNOVATION TECHNOLOGY CO., LTD.) 12 September 2017 (2017-09-12) entire document | 1-31 |
| A | US 7583364 B1 (UNIVERSITY CORPORATION FOR ATMOSPHERIC RESEARCH) 01 September 2009 (2009-09-01) entire document | 1-31 |

☐ Further documents are listed in the continuation of Box C.    ☑ See patent family annex.

| | |
| --- | --- |
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **20 September 2018** | **12 October 2018** |

| Name and mailing address of the ISA/CN | Authorized officer |
| --- | --- |
| **State Intellectual Property Office of the P. R. China** **No. 6, Xitucheng Road, Jimenqiao Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2018/081367**

| Patent document cited in search report | | | Publication date (day/month/year) | Patent family member(s) | | | Publication date (day/month/year) |
|---|---|---|---|---|---|---|---|
| CN | 104297760 | A | 21 January 2015 | None | | | |
| CN | 102749626 | A | 24 October 2012 | CN | 102749626 | B | 08 April 2015 |
| CN | 106684694 | A | 17 May 2017 | None | | | |
| CN | 206321794 | U | 11 July 2017 | None | | | |
| CN | 107153194 | A | 12 September 2017 | None | | | |
| US | 7583364 | B1 | 01 September 2009 | None | | | |

Form PCT/ISA/210 (patent family annex) (January 2015)

**REFERENCES CITED IN THE DESCRIPTION**

**Patent documents cited in the description**

- CN 201810036235
- CN 201810045754
- CN 201810045703